# EUROPEAN PATENT APPLICATION

(11) **EP 4 832 633 A1**
(43) Date of publication of application: **28.10.2026**
(21) Application number: 24921624.3
(22) Date of filing: 12.11.2024
(51) Int. Cl.: H04W 72/23

(54) **COMMUNICATION METHOD AND COMMUNICATION APPARATUS**

(30) Priority: 31.01.2024 CN 202410142595
(71) Applicant: Huawei Technologies Co., Ltd., Shenzhen, Guangdong 518129 (CN)
(72) Inventor: XUAN, Yidi, Shenzhen, Guangdong 518129 (CN); LI, Ruijie, Shenzhen, Guangdong 518129 (CN); CHEN, Weimin, Shenzhen, Guangdong 518129 (CN)
(74) Representative: Grünecker Patent- und Rechtsanwälte PartG mbB
(86) International application number: PCT/CN2024/131436
(87) International publication number: WO 2025/161602

(57) **Abstract**

This application provides a communication method and a communication apparatus. The communication method includes: A second network device receives, on a first time-domain resource and a first frequency-domain resource, a first signal sent by a first terminal device, where the first signal indicates that a second signal is sent or received between a first network device and the first terminal device on a second time-domain resource and a second frequency-domain resource; and the second network device determines, based on the first signal, signal sending or receiving between the second network device and a second terminal device on the second time-domain resource and the second frequency-domain resource. According to the method in embodiments of this application, when there is a requirement for sending or receiving the second signal, the first signal is first sent, so that an interfering network device or terminal device can identify a data sending requirement of the second signal, to perform interference avoidance, thereby reducing communication interference.

## Description

This application claims priority to Chinese Patent Application No. 202410142595.8, filed with the China National Intellectual Property Administration on January 31, 2024 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

Currently, air communication services are gradually widely used. For example, uncrewed aerial vehicles provide air logistics services, and low-altitude passenger-carrying uncrewed aerial vehicles can provide air urban commuting services, to resolve congestion problems. Downlink communication for the air communication services needs to provide high spectral efficiency for an air device to meet entertainment and communication requirements of the air device. Uplink communication for the air communication services needs to provide a high throughput to achieve real-time control backhaul of the air device.

However, in comparison with conventional terrestrial communication, signal propagation in air communication is mainly line-of-sight propagation (line-of-sight propagation, LOS propagation). The line-of-sight propagation is a propagation mode in which radio signals are propagated in a straight line between a transmit end and a receive end without obstacles. In other words, the line-of-sight propagation is a propagation mode in which radio signals are directly propagated from a transmission point to a reception point within a distance (that is, within a line-of-sight) where a transmit antenna and a receive antenna can be in "view" of each other (for example, without obstacles). In comparison with the conventional terrestrial communication, line-of-sight communication experiences less radio signal attenuation, leading to higher signal strength and wider signal coverage. Therefore, in the foregoing air communication scenario, more interference is caused to a cell serving an air terminal device, and the line-of-sight transmission also leads to increased inter-cell interference. As a result, in a signal transmission scenario of air communication, uplink and downlink transmission of an air device is subjected to strong inter-cell interference, and transmission performance of the air device is affected.

### SUMMARY

This application provides a communication method and a communication apparatus, to reduce communication interference.

According to a first aspect, a communication method is provided. The method may be performed by a second network device, or may be performed by a module (for example, a chip or a circuit) in the second network device, or may be performed by a logical node, a logical module, or software that can implement all or a part of functions of the second network device. This is not limited in this application.

The method includes: The second network device receives, on a first time-domain resource and a first frequency-domain resource, a first signal sent by a first terminal device, where the first signal indicates that a second signal is sent or received between a first network device and the first terminal device on a second time-domain resource and a second frequency-domain resource; and the second network device determines, based on the first signal, signal sending or receiving between the second network device and a second terminal device on the second time-domain resource and the second frequency-domain resource.

Optionally, no communication connection is established between the first terminal device and the second network device. In other words, the second network device may receive, in a blind detection manner, the first signal sent by the first terminal device.

Therefore, specifically, in the communication method shown in the first aspect, after receiving the first signal, the second network device determines or adjusts, based on a fact that the second signal is sent or received between the first network device and the first terminal device on the second time-domain resource and the second frequency-domain resource and that is indicated in the first signal, signal sending or receiving between the second network device and the second terminal device on the second time-domain resource and the second frequency-domain resource, to avoid interference caused by a signal between the second network device and the second terminal device on the second time-domain resource and the second frequency-domain resource to sending or receiving of the second signal, thereby reducing interference in inter-cell signal transmission.

It should be understood that the signal between the second network device and the second terminal device may be any signal, for example, a signal that can be dynamically scheduled, or may be a signal that is periodically sent or received.

Optionally, the first signal may be determined based on first configuration information and/or resource configuration information. Specifically, the first configuration information may include cell configuration information and/or location information of a first cell, and the resource configuration information indicates a first resource (for example, indicates a time-domain resource and a frequency-domain resource). The first resource may be used by the first terminal device to send the first signal, and the first resource may also be used by the second network device to receive the first signal.

With reference to the first aspect, in some implementations of the first aspect, the first signal is a reference signal.

For example, the cell configuration information of the first cell may include a physical cell identifier of the first cell or sequence information of the first signal indicated by the first cell. In this case, the first signal may be a cell-level reference signal generated based on the cell configuration information of the first cell. For example, the first signal is a sequence (for example, a Zadoff Chu sequence) generated based on a root index. The root index may be equal to a value of the physical cell identifier of the first cell. Alternatively, the root index may be equal to a sequence value of the first signal indicated by the first cell. For example, the first signal is scrambled by using a first scrambling code, and the first scrambling code is generated based on the physical cell identifier of the first cell. The location information of the first cell may include information indicating an area or a location of the first cell, such as global positioning system (global positioning system, GPS) information. In this case, the first signal may be an area-level reference signal generated based on the location information.

Optionally, the second signal may be a data signal, for example, a physical downlink shared channel (physical downlink shared channel, PDSCH) signal or a physical uplink shared channel (physical uplink shared channel, PUSCH) signal, or may be a control signal, for example, a physical downlink control channel (physical downlink control channel, PDCCH), or may be a reference signal, for example, a positioning reference signal (positioning reference signal).

According to the foregoing method, when there is a requirement for sending or receiving the second signal between the first terminal device and the first network device, the first terminal device may first send the first signal, so that a network device and a terminal device in another cell can identify, based on the first signal, the requirement for sending or receiving the second signal, and adjust signal sending or receiving, to implement interference avoidance, thereby ensuring that data transmission of the second signal is not interfered with.

In addition, the second network device may receive the first signal from an air device, in other words, send and receive a signal through an air interface. This achieves a lower delay in comparison with information exchange between stations.

With reference to the first aspect, in some implementations of the first aspect, a frequency range of the first frequency-domain resource includes a frequency range of the second frequency-domain resource.

It should be understood that the frequency range of the second frequency-domain resource may be the same as the frequency range of the first frequency-domain resource, or may be a part of the frequency range of the first frequency-domain resource.

With reference to the first aspect, in some implementations of the first aspect, the first frequency-domain resource includes M first frequency-domain resource grids, the second frequency-domain resource includes N first frequency-domain resource grids in the M first frequency-domain resource grids, and N is less than or equal to M.

Optionally, the M first frequency-domain resource grids may be included in K first frequency-domain resource grids, and frequency-domain resources included in the K first frequency-domain resource grids may be all or a part of frequency-domain resources of the first cell, where M is a positive integer less than or equal to K.

With reference to the first aspect, in some implementations of the first aspect, the first frequency-domain resource grid is a detection granularity for the first signal, and the first frequency-domain resource grid is a scheduling granularity for the second signal.

With reference to the first aspect, in some implementations of the first aspect, the first frequency-domain resource includes M first frequency-domain resource grids, the second frequency-domain resource includes L second frequency-domain resource grids, the first frequency-domain resource grid is a detection granularity for the first signal, and the second frequency-domain resource grid is a scheduling granularity for the second signal.

With reference to the first aspect, in some implementations of the first aspect, the first frequency-domain resource grid and the second frequency-domain resource grid have different sizes.

With reference to the first aspect, in some implementations of the first aspect, the first frequency-domain resource grid and the second frequency-domain resource grid have different sizes, and the second frequency-domain resource grid may be obtained by further dividing the first frequency-domain resource grid. In other words, each of the M first frequency-domain resource grids includes a plurality of second frequency-domain resource grids.

With reference to the first aspect, in some implementations of the first aspect, there are correspondences between different types of first signals carried in one of the first frequency-domain resource grids and different quantities of the second frequency-domain resource grids.

It should be understood that one first frequency-domain resource grid may correspond to a plurality of types of first signals, and the plurality of types of first signals respectively indicate that the second signal is sent or received on different quantities of the second frequency-domain resource grids. The second network device further determines, based on the types of the first signals, the frequency range of the second frequency-domain resource, or determines specific second frequency-domain resource grids included in the second frequency-domain resource.

With reference to the first aspect, in some implementations of the first aspect, that the second network device determines signal sending or receiving between the second network device and the second terminal device on the second time-domain resource and the second frequency-domain resource is specifically: The second network device sends first indication information, where the first indication information indicates to stop or cancel sending or receiving a third signal between the second network device and the second terminal device on the second time-domain resource and the second frequency-domain resource.

In this manner, sending of the third signal is stopped or canceled, so that interference caused by the third signal between the second network device and the second terminal device to the second signal between the first network device and the first terminal device is avoided.

With reference to the first aspect, in some implementations of the first aspect, the determining signal sending or receiving between the second network device and the second terminal device on the second time-domain resource and the second frequency-domain resource is specifically: sending second indication information, where the second indication information indicates to adjust a space domain transmission configuration of a third signal between the second network device and the second terminal device on the second frequency-domain resource, and the space domain transmission configuration includes at least one of a precoding matrix, a space domain filter, or a beam of the third signal.

In this manner, the space domain configuration is adjusted, so that interference caused by the third signal between the second network device and the second terminal device to the second signal between the first network device and the first terminal device can be suppressed.

With reference to the first aspect, in some implementations of the first aspect, the third signal may be a signal that is periodically sent or received. For example, if the third signal should be periodically sent or received on the second time-domain resource and the second frequency-domain resource, it can be determined that the third signal is not sent or received between the second network device and the second terminal device, or the space domain transmission configuration of the third signal is adjusted.

With reference to the first aspect, in some implementations of the first aspect, the determining signal sending or receiving between the second network device and the second terminal device on the second time-domain resource and the second frequency-domain resource is specifically: determining to skip signal sending or receiving between the second network device and the second terminal device on the second time-domain resource and the second frequency-domain resource.

In this way, signal sending or receiving causing interference to the second signal can be completely avoided between the second network device and the second terminal device on the second time-domain resource and the second frequency-domain resource.

With reference to the first aspect, in some implementations of the first aspect, the second time-domain resource is located after the first time-domain resource.

With reference to the first aspect, in some implementations of the first aspect, an interval between end time of the first time-domain resource and start time of the second time-domain resource is J time units, and J is a positive integer.

With reference to the first aspect, in some implementations of the first aspect, the second time-domain resource is consecutive to the first time-domain resource.

With reference to the first aspect, in some implementations of the first aspect, the second time-domain resource may be a scheduling time period in which the first signal is sent or received once.

With reference to the first aspect, in some implementations of the first aspect, the first signal is a PDSCH signal, and if a scheduling time-domain resource of the PDSCH signal is L to L+K symbols in a first slot, the second time-domain resource is the L to L+K symbols in the first slot.

Optionally, the second time-domain resource may be a predefined or preconfigured time window, and the first signal may be sent or received once or a plurality of times in the time window.

With reference to the first aspect, in some implementations of the first aspect, the first time-domain resource and the second time-domain resource are included in a first time unit; or the first time-domain resource is included in a second time unit, and the second time-domain resource includes a plurality of time units.

Optionally, the time unit may further include a third time-domain resource. The third time-domain resource is located before the first time-domain resource, and is a time period in which the first network device sends the third indication information or the first terminal device receives the third indication information. The third indication information may be first information, for example, DCI, for scheduling sending or receiving of the second signal, or may be carried in the first information.

For example, the first time-domain resource may be included in a second time unit, the second time-domain resource may include one or more time units, and the one or more time units may include the second time unit.

According to a second aspect, a communication method is provided. The method may be performed by a first terminal device, or may be performed by a module (for example, a chip or a circuit) in the first terminal device, or may be performed by a logical node, a logical module, or software that can implement all or a part of functions of the first terminal device. This is not limited in this application.

The method includes: The first terminal device sends a first signal on a first time-domain resource and a first frequency-domain resource, where the first signal indicates that a second signal is sent or received between a first network device and the first terminal device on a second time-domain resource and a second frequency-domain resource. The first terminal device sends the second signal to the first network device or receives the second signal from the first network device on the second time-domain resource and the second frequency-domain resource.

The first terminal device may be an uncrewed aerial vehicle on an air terminal, a satellite, or a terminal device on an air device.

The first terminal device may exchange the first signal with a second network device through an air interface, so that the second network device and a second terminal device learn of existence of sending or receiving of the second signal. This achieves a lower delay in comparison with information exchange through a backhaul link (for example, a network device exchanging information with another network device through the backhaul link).

According to the foregoing method, when the first terminal device has a requirement for sending or receiving the second signal, the first terminal device may first send the first signal, to notify a network device and a terminal device in another cell to perform interference avoidance, thereby ensuring that data transmission of the second signal is not interfered with.

Optionally, the first terminal device that sends the first signal may be the same as or different from a communication device that sends or receives the second signal. For example, the first terminal device determines that the second signal is sent or received between another terminal device and the network device on the second time-domain resource and the second frequency-domain resource, and then the first terminal device sends the first signal.

With reference to the second aspect, in some implementations of the second aspect, the first signal is a reference signal.

For specific solution descriptions of the first signal and the second signal, refer to the first aspect. Details are not described herein again.

With reference to the second aspect, in some implementations of the second aspect, a frequency range of the first frequency-domain resource includes a frequency range of the second frequency-domain resource.

With reference to the second aspect, in some implementations of the second aspect, the first frequency-domain resource includes M first frequency-domain resource grids, the second frequency-domain resource includes N first frequency-domain resource grids in the M first frequency-domain resource grids, and N is less than or equal to M.

With reference to the second aspect, in some implementations of the second aspect, the first frequency-domain resource grid is a sending granularity for the first signal, and the first frequency-domain resource grid is a scheduling granularity for the second signal.

It should be understood that, for the first terminal device, the first frequency-domain resource grid is a sending granularity for the first signal. In other words, the first terminal device sends the first signal on the first frequency-domain resource (that is, a frequency-domain resource included in the M first frequency-domain resource grids) at a granularity of one first frequency-domain resource grid.

Optionally, the first frequency-domain resource grid is a generation granularity for the first signal. In other words, the first signal is a set of M signals generated by the first terminal device on the M first frequency-domain resource grids at a granularity of one first frequency-domain resource grid.

It should be understood that the first terminal device may learn that the second network device performs detection on the first signal at a granularity of the first frequency domain grid, and in this case, the first terminal device may also send the first signal on the first time-domain resource and the first frequency-domain resource at a granularity of the first frequency-domain resource grid. In addition, the first network device serving a first cell schedules, by using the second frequency-domain resource grid as a scheduling granularity, the first terminal device to send or receive the second signal on the second time-domain resource and the second frequency-domain resource. The second network device performs detection on the first signal separately on the first time-domain resource and a first transmission bandwidth by using the first frequency-domain resource grid as a detection granularity. If the second network device detects the first signal on the first time-domain resource and the first frequency-domain resource, the second network device learns that the second signal is sent or received between the first network device and the first terminal device on the second time-domain resource and the second frequency-domain resource.

With reference to the second aspect, in some implementations of the second aspect, the first frequency-domain resource includes M first frequency-domain resource grids, the second frequency-domain resource includes L second frequency-domain resource grids, the first frequency-domain resource grid is a generation granularity for the first signal, and the second frequency-domain resource grid is a scheduling granularity for the second signal.

It should be understood that the first terminal device may learn that the second network device performs detection on the first signal at a granularity of the first frequency domain grid, and in this case, the first terminal device may also send the first signal on the first time-domain resource and the first frequency-domain resource at a granularity of the first frequency-domain resource grid. In addition, the first network device schedules, by using the second frequency-domain resource grid as a scheduling granularity, the first terminal device to send or receive the second signal on the second time-domain resource and the second frequency-domain resource. The second network device performs detection on the first signal separately on the first time-domain resource and a first transmission bandwidth by using the first frequency-domain resource grid as a detection granularity. If the second network device detects the first signal on the first time-domain resource and the first frequency-domain resource, the second network device learns that the second signal is sent or received between the first network device and the first terminal device on the second time-domain resource and the second frequency-domain resource.

With reference to the second aspect, in some implementations of the second aspect, each of the M first frequency-domain resource grids includes a plurality of second frequency-domain resource grids.

With reference to the second aspect, in some implementations of the second aspect, there are correspondences between different types of first signals carried in one of the first frequency-domain resource grids and different quantities of the second frequency-domain resource grids.

For specific solution descriptions of the first frequency-domain resource grid and the second frequency-domain resource grid, refer to the first aspect. Details are not described herein again.

With reference to the second aspect, in some implementations of the second aspect, an interval between end time of the first time-domain resource and start time of the second time-domain resource is J time units, and J is a positive integer.

With reference to the second aspect, in some implementations of the second aspect, the first time-domain resource and the second time-domain resource are included in a first time unit; or the first time-domain resource is included in a second time unit, and the second time-domain resource includes a plurality of time units.

For specific solution descriptions of the first time-domain resource and the second time-domain resource, refer to the first aspect. Details are not described herein again.

With reference to the second aspect, in some implementations of the second aspect, the method further includes: receiving, on a third time-domain resource, third indication information sent by the first network device, where the third indication information indicates the first terminal device to send the first signal on the first time-domain resource and the first frequency-domain resource, and the third time-domain resource is located before the first time-domain resource.

With reference to the second aspect, in some implementations of the second aspect, the third indication information is carried in first information, and the first information is for scheduling the second signal; or the third indication information is further for scheduling the second signal.

Optionally, the third indication information may be first information, for example, downlink control information (downlink control information, DCI), for scheduling the second signal; or may be one or more bits carried in the first information (for example, carried in DCI). The first information is for scheduling the first signal. To be specific, the first information may be for scheduling the first network device to send or receive the second signal. Specifically, for example, after receiving the first information, the first terminal device may first send the first signal by default, and then send or receive the second signal. Therefore, in addition to scheduling the second signal, the first information further has a function of indicating sending of the first signal. For another example, the third indication information may be for triggering the first terminal device to send the first signal on the first time-domain resource and the first frequency-domain resource. In other words, after receiving the third indication information, the first terminal device immediately sends the first signal at an end moment of the third indication information. Specific content of the third indication information is not limited in this application.

With reference to the second aspect, in some implementations of the second aspect, in the second time-domain resource, the second frequency-domain resource is a frequency-domain resource on which the first terminal device does not expect to receive a signal from a network device other than the first network device; or in the second time-domain resource, the first terminal device does not expect to receive a signal from a network device other than the first network device on the second frequency-domain resource.

For some optional implementations and beneficial effects of the second aspect, refer to the first aspect. Details are not described again.

According to a third aspect, a communication method is provided. The method includes: A first network device sends third indication information to a first terminal device, where the third indication information indicates the first terminal device to send a first signal on a first time-domain resource and a first frequency-domain resource, and the first signal indicates that a second signal is sent or received between the first network device and the first terminal device on a second time-domain resource and a second frequency-domain resource. The first terminal device sends the first signal on the first time-domain resource and the first frequency-domain resource based on the third indication information. A second network device receives, on the first time-domain resource and the first frequency-domain resource, the first signal sent by the first terminal device, and determines, based on the first signal, signal sending or receiving between the second network device and a second terminal device on the second time-domain resource and the second frequency-domain resource.

With reference to the third aspect, in some implementations of the third aspect, that the first network device sends the third indication information to the first terminal device includes: The first network device sends the third indication information to the first terminal device on a third time-domain resource, where the third time-domain resource is located before the first time-domain resource.

With reference to the third aspect, in some implementations of the third aspect, the third indication information is carried in first information, and the first information is for scheduling the second signal; or the third indication information is further for scheduling the second signal.

With reference to the third aspect, in some implementations of the third aspect, in the second time-domain resource, the second frequency-domain resource is a frequency-domain resource on which the first terminal device does not expect to receive a signal from a network device other than the first network device; or in the second time-domain resource, the first terminal device does not expect to receive a signal from a network device other than the first network device on the second frequency-domain resource.

With reference to the third aspect, in some implementations of the third aspect, that the second network device determines signal sending or receiving between the second network device and the second terminal device on the second time-domain resource and the second frequency-domain resource is specifically: The second network device sends first indication information, where the first indication information indicates to stop or cancel sending or receiving a third signal between the second network device and the second terminal device on the second time-domain resource and the second frequency-domain resource.

With reference to the third aspect, in some implementations of the third aspect, that the second network device determines signal sending or receiving between the second network device and the second terminal device on the second time-domain resource and the second frequency-domain resource is specifically: The second network device sends second indication information, where the second indication information indicates to adjust a space domain transmission configuration of a third signal between the second network device and the second terminal device on the second frequency-domain resource, and the space domain transmission configuration includes at least one of a precoding matrix, a space domain filter, or a beam of the third signal.

With reference to the third aspect, in some implementations of the third aspect, that the second network device determines signal sending or receiving between the second network device and the second terminal device on the second time-domain resource and the second frequency-domain resource is specifically: The second network device determines to skip signal sending or receiving between the second network device and the second terminal device on the second time-domain resource and the second frequency-domain resource.

For a specific solution of the method in the third aspect, refer to the descriptions in the first aspect and the second aspect. Details are not described herein again.

According to a fourth aspect, a communication apparatus is provided. The apparatus includes: a transceiver unit, configured to receive, on a first time-domain resource and a first frequency-domain resource, a first signal sent by a first terminal device, where the first signal indicates that a second signal is sent or received between a first network device and the first terminal device on a second time-domain resource and a second frequency-domain resource; and a processing unit, configured to determine, based on the first signal, signal sending or receiving between a second network device and a second terminal device on the second time-domain resource and the second frequency-domain resource.

With reference to the fourth aspect, in some implementations of the fourth aspect, the transceiver unit is specifically configured to send first indication information, where the first indication information indicates to stop or cancel sending or receiving a third signal between the second network device and the second terminal device on the second time-domain resource and the second frequency-domain resource.

With reference to the fourth aspect, in some implementations of the fourth aspect, the transceiver unit is specifically configured to send second indication information, where the second indication information indicates to adjust a space domain transmission configuration of a third signal between the second network device and the second terminal device on the second frequency-domain resource, and the space domain transmission configuration includes at least one of a precoding matrix, a space domain filter, or a beam of the third signal.

With reference to the fourth aspect, in some implementations of the fourth aspect, the processing unit is specifically configured to determine to skip signal sending or receiving between the second network device and the second terminal device on the second time-domain resource and the second frequency-domain resource.

For explanations and beneficial effects of related content of the communication apparatus provided in the fourth aspect, refer to the communication method shown in the first aspect. Details are not described herein again.

According to a fifth aspect, a communication apparatus is provided. The apparatus includes: a transceiver unit, configured to: send a first signal on a first time-domain resource and a first frequency-domain resource, where the first signal indicates that a second signal is sent or received between a first network device and a first terminal device on a second time-domain resource and a second frequency-domain resource; and send or receive the second signal on the second time-domain resource and the second frequency-domain resource.

With reference to the fifth aspect, in some implementations of the fifth aspect, the first signal is a reference signal.

With reference to the fifth aspect, in some implementations of the fifth aspect, a frequency range of the first frequency-domain resource includes a frequency range of the second frequency-domain resource.

With reference to the fifth aspect, in some implementations of the fifth aspect, the transceiver unit is further configured to receive, on a third time-domain resource, third indication information sent by the first network device, where the third indication information indicates the first terminal device to send the first signal on the first time-domain resource and the first frequency-domain resource, and the third time-domain resource is located before the first time-domain resource.

With reference to the fifth aspect, in some implementations of the fifth aspect, in the second time-domain resource, the second frequency-domain resource is a frequency-domain resource on which the first terminal device does not expect to receive a signal from a network device other than the first network device; or in the second time-domain resource, the first terminal device does not expect to receive a signal from a network device other than the first network device on the second frequency-domain resource.

For explanations and beneficial effects of related content of the communication apparatus provided in the fifth aspect, refer to the communication method shown in the second aspect. Details are not described herein again.

According to a sixth aspect, a communication system is provided. The communication system includes a first network device, a first terminal device, and a second network device. The first network device sends third indication information to a first terminal device, where the third indication information indicates the first terminal device to send a first signal on a first time-domain resource and a first frequency-domain resource, and the first signal indicates that a second signal is sent or received between the first network device and the first terminal device on a second time-domain resource and a second frequency-domain resource. The terminal device sends the first signal on the first time-domain resource and the first frequency-domain resource based on the third indication information. The second network device receives the first signal on the first time-domain resource and the first frequency-domain resource, and determines, based on the first signal, signal sending or receiving between the second network device and a second terminal device on the second time-domain resource and the second frequency-domain resource.

With reference to the sixth aspect, in some implementations of the sixth aspect, that the first network device sends the third indication information to the first terminal device includes: The first network device sends the third indication information to the first terminal device on a third time-domain resource, where the third time-domain resource is located before the first time-domain resource.

With reference to the sixth aspect, in some implementations of the sixth aspect, the third indication information is carried in first information, and the first information is for scheduling the second signal; or the third indication information is further for scheduling the second signal.

With reference to the sixth aspect, in some implementations of the sixth aspect, in the second time-domain resource, the second frequency-domain resource is a frequency-domain resource on which the terminal device does not expect to receive a signal from a network device other than the first network device; or in the second time-domain resource, the terminal device does not expect to receive a signal from a network device other than the first network device on the second frequency-domain resource.

With reference to the sixth aspect, in some implementations of the sixth aspect, that the second network device determines signal sending or receiving between the second network device and the second terminal device on the second time-domain resource and the second frequency-domain resource is specifically: The second network device sends first indication information, where the first indication information indicates to stop or cancel sending or receiving a third signal between the second network device and the second terminal device on the second time-domain resource and the second frequency-domain resource.

With reference to the sixth aspect, in some implementations of the sixth aspect, that the second network device determines signal sending or receiving between the second network device and the second terminal device on the second time-domain resource and the second frequency-domain resource is specifically: The second network device sends second indication information, where the second indication information indicates to adjust a space domain transmission configuration of a third signal between the second network device and the second terminal device on the second frequency-domain resource, and the space domain transmission configuration includes at least one of a precoding matrix, a space domain filter, or a beam of the third signal.

With reference to the sixth aspect, in some implementations of the sixth aspect, that the second network device determines signal sending or receiving between the second network device and the second terminal device on the second time-domain resource and the second frequency-domain resource is specifically: The second network device determines to skip signal sending or receiving between the second network device and the second terminal device on the second time-domain resource and the second frequency-domain resource.

For explanations and beneficial effects of related content of the communication system provided in the sixth aspect, refer to the communication method shown in the third aspect. Details are not described herein again.

According to a seventh aspect, a communication apparatus is provided, and includes a processor. The processor is configured to cause, by executing a computer program or instructions or by using a logic circuit, the communication apparatus to perform the method according to any one of the first aspect and the possible implementations of the first aspect.

In a possible implementation, the communication apparatus further includes a memory. The memory is configured to store the computer program or the instructions.

In a possible implementation, the communication apparatus further includes a communication interface, configured to input and/or output a signal.

According to an eighth aspect, a communication apparatus is provided, and includes a processor. The processor is configured to cause, by executing a computer program or instructions or by using a logic circuit, the communication apparatus to perform the method according to any one of the second aspect and the possible implementations of the second aspect.

In a possible implementation, the communication apparatus further includes a memory. The memory is configured to store the computer program or the instructions.

In a possible implementation, the communication apparatus further includes a communication interface, configured to input and/or output a signal.

According to a ninth aspect, a communication apparatus is provided, and includes a logic circuit and an input/output interface. The input/output interface is configured to input and/or output a signal. The logic circuit is configured to perform the method according to any one of the first aspect and the possible implementations of the first aspect. Alternatively, the logic circuit is configured to perform the method according to any one of the second aspect and the possible implementations of the second aspect. Alternatively, the logic circuit is configured to perform the method according to any one of the third aspect and the possible implementations of the third aspect.

According to a tenth aspect, a computer-readable storage medium is provided. The computer-readable storage medium stores a computer program or instructions. When the computer program or the instructions are run on a computer, the method according to any one of the first aspect and the possible implementations of the first aspect is performed; the method according to any one of the second aspect and the possible implementations of the second aspect is performed; or the method according to any one of the third aspect and the possible implementations of the third aspect is performed.

According to an eleventh aspect, a computer program product is provided, and includes instructions. When the instructions are run on a computer, the method according to any one of the first aspect and the possible implementations of the first aspect is performed; the method according to any one of the second aspect and the possible implementations of the second aspect is performed; or the method according to any one of the third aspect and the possible implementations of the third aspect is performed.

According to a twelfth aspect, a communication system is provided. The communication system includes the communication apparatus according to the seventh aspect and the communication apparatus according to the eighth aspect.

For descriptions of beneficial effects of the fourth aspect to the twelfth aspect, refer to the descriptions of the first aspect to the third aspect.

### BRIEF DESCRIPTION OF DRAWINGS

FIG. 1 is a diagram of a network architecture according to an embodiment of this application;
FIG. 2 is a schematic flowchart of a communication method according to an embodiment of this application;
FIG. 3 is a diagram of another network architecture according to an embodiment of this application;
FIG. 4 is a schematic flowchart of another communication method according to an embodiment of this application;
FIG. 5a and FIG. 5b are schematic flowcharts of sending third indication information according to an embodiment of this application;
FIG. 6 is a schematic flowchart of another communication method according to an embodiment of this application;
FIG. 7 is a schematic flowchart of another communication method according to an embodiment of this application;
FIG. 8 is a diagram of a first frequency-domain resource and a second frequency-domain resource according to an embodiment of this application;
FIG. 9a and FIG. 9b are other diagrams of a first frequency-domain resource and a second frequency-domain resource according to an embodiment of this application;
FIG. 10a to FIG. 10d are diagrams of a first time-domain resource and a second time-domain resource according to an embodiment of this application;
FIG. 11 is another diagram of a first time-domain resource and a second time-domain resource according to an embodiment of this application;
FIG. 12 is a block diagram of a communication apparatus according to an embodiment of this application;
FIG. 13 is a block diagram of another communication apparatus according to an embodiment of this application; and
FIG. 14 is a block diagram of another communication apparatus according to an embodiment of this application.

### DESCRIPTION OF EMBODIMENTS

The following describes technical solutions of this application with reference to accompanying drawings.

Before embodiments are described, terms in this application are described in detail.

### 1. Line-of-sight transmission

Signal propagation in air communication is mainly line-of-sight propagation (line-of-sight propagation, LOS propagation). The line-of-sight propagation is a propagation mode in which radio signals are propagated in a straight line between a transmit end and a receive end without obstacles. In other words, the line-of-sight propagation is a propagation mode in which radio signals are directly propagated from a transmission point to a reception point within a distance (that is, within a line-of-sight) where a transmit antenna and a receive antenna can be in "view" of each other (for example, without obstacles).

### 2. Time unit

The time unit may be a slot (slot), an orthogonal frequency division multiplexing (orthogonal frequency division multiplexing, OFDM) symbol, a mini-slot (mini-slot), a transmission time interval (transmission time interval, TTI), or a subframe (subframe).

### 3. Frequency-domain resource grid (resource grid)

All or a part of a frequency-domain resource of a transmission bandwidth of a cell may be classified into a plurality of frequency-domain resource grids. Each frequency-domain resource grid may include a part of resource blocks (resource blocks, RBs) in the transmission bandwidth. For example, the transmission bandwidth of the cell may include 20 resource blocks numbered as an RB #0 to an RB #19. The 20 resource blocks may be classified into five frequency-domain resource grids numbered as a frequency-domain resource grid #1 to a frequency-domain resource grid #5. Each first frequency-domain resource grid includes four RBs. To be specific, the frequency-domain resource grid #1 includes the RB #0 to the RB #3; the frequency-domain resource grid #2 includes the RB #4 to the RB #7; and so on. The frequency-domain resource grid may also be referred to as a frequency-domain resource raster, a frequency-domain resource unit, or the like. This is not limited in this patent.

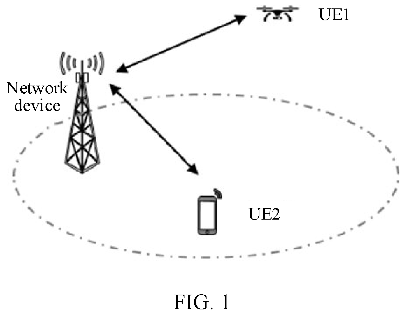

First, with reference to FIG. 1, a communication system and a network architecture to which embodiments of this application are applicable are described.

The technical solutions provided in this application may be applied to various communication systems, for example, a 5th generation (5th generation, 5G) system or a new radio (new radio, NR) system, a long term evolution (long term evolution, LTE) system, an LTE frequency division duplex (frequency division duplex, FDD) system, an LTE time division duplex (time division duplex, TDD) system, and a universal mobile telecommunications system (universal mobile telecommunications system, UMTS). The technical solutions provided in this application may be further applied to a future communication system, for example, a 6th generation (6th generation, 6G) mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine-type communication (machine-type communication, MTC), an internet of things (internet of things, IoT) communication system, a non-terrestrial network (non-terrestrial network, NTN) communication system, or another communication system.

This application may also be applied to another communication system, provided that one entity in the communication system needs to send downlink data and pilot information, and another entity needs to receive indication information and can feed back information and transmit data through an uplink. In other words, there are downlink and uplink communication links in the communication system.

It should be understood that a specific structure of an execution entity of a method provided is not particularly limited in embodiments of this application, provided that a program that records code of the method provided in embodiments of this application can be run to perform communication according to the method provided in embodiments of this application. For example, the execution entity of the method provided in embodiments of this application may be a terminal device or a network device, or a functional module that can invoke and execute a program in the terminal device or the network device.

For example, FIG. 1 is a diagram of a network architecture according to an embodiment of this application. For example, the architecture may include terminal devices UE1 and UE2, and a network device.

The terminal device in embodiments of this application may also be referred to as a terminal, and may be a device having a wireless transceiver function. The terminal device may be deployed on land, including an indoor device, an outdoor device, a handheld device, or a vehicle-mounted device; may be deployed on a water surface (for example, on a ship); or may be deployed in the air (for example, on an aircraft, a balloon, or a satellite). The terminal device may be a user equipment (user equipment, UE). The UE includes a handheld device, a vehicle-mounted device, a wearable device, or a compute device having a wireless communication function. For example, the UE may be a mobile phone (mobile phone), a tablet computer, or a computer having a wireless transceiver function. In addition, the terminal device may be an apparatus, for example, a chip or a chip system, that can support a terminal in implementing the function. The apparatus may be installed in the terminal. In the technical solutions provided in embodiments of this application, an example in which an apparatus configured to implement a function of the terminal is a terminal is used for describing the technical solutions provided in embodiments of this application. It should be understood that the terminal is a general term, and includes a most common mobile phone, CPE, and a backhaul (integrated access and backhaul, IAB) terminal. The terminal device may alternatively be a virtual reality (virtual reality, VR) terminal device, an augmented reality (augmented reality, AR) terminal device, a wireless terminal in industrial control, a wireless terminal in self-driving, a wireless terminal in telemedicine, a wireless terminal in a smart grid, a wireless terminal in a smart city (smart city), a wireless terminal in a smart home (smart home), or the like.

In embodiments of this application, an apparatus configured to implement a function of the terminal device may be a terminal device, or may be an apparatus, for example, a chip system or a chip, that can support the terminal device in implementing the function. The apparatus may be installed in the terminal device. In embodiments of this application, the chip system may include a chip, or may include a chip and another discrete component.

The network device in embodiments of this application includes a base station (base station, BS), and may be a device that is deployed in a radio access network and that can perform wireless communication with a terminal. The base station may be in a plurality of forms, for example, a macro base station, a micro base station, a relay station, an access point, or a backhaul station. For example, the base station in embodiments of this application may be a base station in 5G or a base station in LTE. The base station in 5G may also be referred to as a transmission reception point (transmission/reception point, TRP) or a next generation NodeB (next generation NodeB, gNB). In embodiments of this application, an apparatus configured to implement a function of the network device may be a network device, or may be an apparatus, for example, a chip or a chip system, that can support the network device in implementing the function. The apparatus may be installed in the network device. In embodiments of this application, the chip system may include a chip, or may include a chip and another discrete component. In the technical solutions provided in embodiments of this application, an example in which an apparatus configured to implement a function of the network device is a network device and the network device is a base station is used for describing the technical solutions provided in embodiments of this application.

As shown in FIG. 1, a network device and terminals UE1 and UE2 form a communication network. UE1 may be the uncrewed aerial vehicle terminal deployed in the air, for example, a passenger-carrying uncrewed aerial vehicle terminal, or UE1 may be a terminal device in an uncrewed aerial vehicle. UE2 may be any terrestrial terminal listed above. The network device may be the foregoing gNB. In the network architecture, the network device may send downlink data to the terminal devices UE1 and UE2, and the terminal devices UE1 and UE2 may send uplink data to the network device.

It should be understood that the network architecture shown above is merely an example for description, and the communication system applicable to embodiments of this application is not limited thereto. Any communication that can implement functions of the foregoing network elements is applicable to embodiments of this application. For example, the network architecture shown in FIG. 1 may include more air UEs and more terrestrial UEs and more types of air UEs and terrestrial UEs. For another example, the communication system in this embodiment of this application may alternatively be a non-terrestrial network (non-terrestrial network, NTN) communication system, for example, a satellite communication network, a high altitude platform system (high altitude platform station, HAPS), or an air-to-ground network. For example, a satellite communication system may include a satellite, and a terminal device on the satellite communicates with a terrestrial base station. The satellite may be a non-terrestrial base station, a non-terrestrial device, or the like, for example, an uncrewed aerial vehicle, a hot air balloon, a low earth orbit satellite, a medium earth orbit satellite, or a high earth orbit satellite. The NTN communication system may be independently deployed, or may be used as a supplement to a terrestrial network.

It should be further understood that the foregoing names are defined merely for ease of distinguishing between different functions, and should not constitute any limitation on this application. This application does not exclude a possibility of using other names in a 6G network and another future network.

The following describes an existing interference management process and an existing technical problem.

Currently, air communication services are gradually widely used. For example, uncrewed aerial vehicles provide air logistics services, and low-altitude passenger-carrying uncrewed aerial vehicles can provide air urban commuting services, to resolve congestion problems. Downlink communication for the air communication services needs to provide high spectral efficiency for an air device to meet entertainment and communication requirements of the air device. Uplink communication for the air communication services needs to provide a high throughput to achieve real-time control backhaul of the air device.

In comparison with conventional terrestrial communication between the network device and the terminal UE2 in FIG. 1, air signal transmission between the network device and the terminal UE1 is mainly line-of-sight propagation (line-of-sight propagation, LOS propagation). Due to propagation in a straight line without obstacles, in comparison with the conventional terrestrial communication, the line-of-sight propagation experiences less radio signal attenuation, leading to higher signal strength and wider signal coverage. Therefore, in comparison with the conventional terrestrial communication, in the foregoing air communication scenario, for example, ground-to-air signal transmission, more terrestrial cells or air cells cause interference to a cell serving an air UE, or more communication devices cause interference to a cell serving an air UE, affecting signal sending or receiving performance of the air UE.

Currently, inter-cell interference management may be performed between an air cell and a terrestrial cell by exchanging scheduling information. For example, when an air device sends or receives data, an interfering cell on the ground or in the air obtains scheduling information of a cell serving the air device, and performs interference avoidance on a corresponding scheduling resource, to be specific, does not send or receive a signal on the scheduling resource of the cell serving the air device. However, it can be learned from the foregoing content that there are a large quantity of interfering cells in the ground-to-air signal transmission scenario. As a result, in this method, information exchange needs to be performed between a large quantity of stations, and an interaction delay is high.

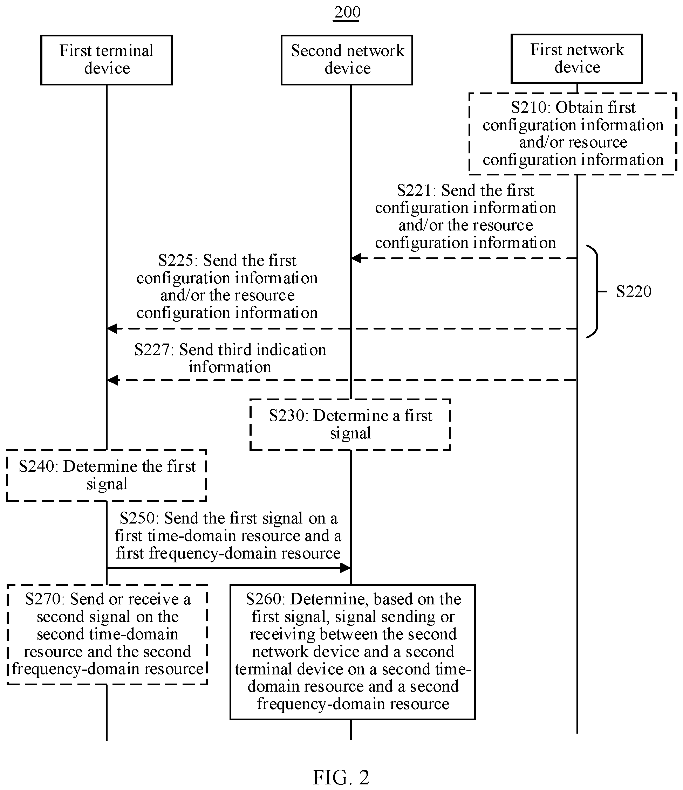

To resolve the foregoing technical problem, this application provides a communication method 200, to implement low-delay inter-cell interference avoidance. The following describes embodiments of the communication method 200 with reference to FIG. 2 to FIG. 11.

### Embodiment 1

FIG. 2 is a schematic interaction flowchart of a communication method 200 according to an embodiment of this application. A first network device, a second network device, and a first terminal device are included. The method shown in FIG. 2 may be performed by the first network device, the second network device, and the first terminal device, or may be performed by a module and/or a component (for example, a chip or an integrated circuit) having a corresponding function and installed in the first network device, the second network device, and the first terminal device. This is not limited in this application.

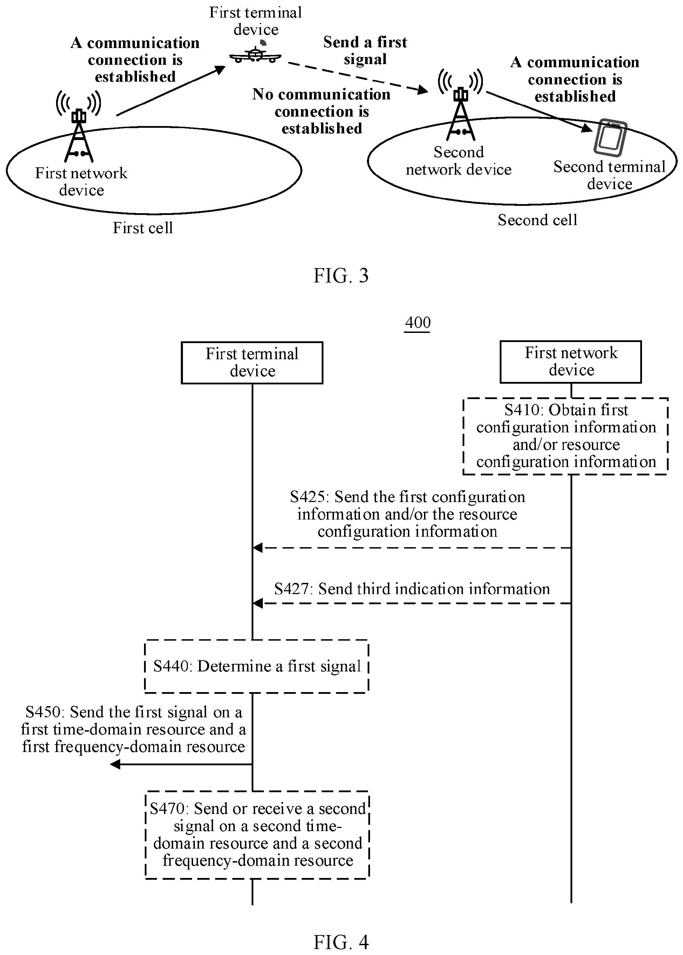

FIG. 3 is a diagram of a network architecture applicable to the communication method 200. As shown in FIG. 3, the first network device may establish a communication connection to the first terminal device, or the first network device provides a service for the first terminal device. However, the second network device may not establish a communication connection to the first terminal device (where it should be understood that the second network device receives a first signal sent by the first terminal device, but this does not mean that the second network device establishes a communication connection to the first terminal device), or the second network device does not serve the first terminal device.

As shown in FIG. 3, the second network device may be a network device that serves a second terminal device in a second cell. The first terminal device may be an air terminal or a terminal on an air device. The first terminal device establishes a connection to the first network device. The first terminal device does not establish a communication connection to the second network device. The second network device may establish a communication connection to the second terminal device. The second terminal device may be a terminal device in the second cell.

As shown in FIG. 3, the first terminal device may be an air terminal or a terminal on an air device, that is, a user of the first terminal device is an air user. Therefore, a first cell closer to the first terminal device may be an air cell, and the first network device may be an air base station. Correspondingly, the second cell farther from the first terminal device may be a terrestrial cell, a user of the second terminal device is a terrestrial user, and the second network device may be a terrestrial base station.

As shown in FIG. 2, the communication method 200 includes step S250 and step S260. Optionally, the communication method 200 may further include step S210 to step S240. In other words, in the communication method 200, a step of determining the first signal and a step of determining a resource for sending the first signal are optional steps. Alternatively, the communication method 200 may include only step S250 and step S260, or may include step S210 to step S260 shown in FIG. 2.

Optionally, in step S210, the first network device obtains first configuration information and/or resource configuration information.

In some embodiments of this application, the first network device may first determine the first configuration information of the first cell and/or the resource configuration information based on the first cell to which the first network device belongs, to obtain the first configuration information and/or the resource configuration information in step S210. In other words, in this embodiment of this application, a process in which a network device obtains information may include descriptions of equivalent replacement. To be specific, the process may include: The network device first determines the information, to obtain the information.

Specifically, the first configuration information may include cell configuration information and/or location information of the first cell, for determining the first signal. The first signal indicates that a second signal is sent or received between the first network device and the first terminal device on a second time-domain resource and a second frequency-domain resource. The resource configuration information indicates a first resource (for example, indicates a time-domain resource and a frequency-domain resource). The first resource may be used by the first terminal device to send the first signal, and the first resource may also be used by the second network device to receive the first signal.

For example, the cell configuration information of the first cell may include a physical cell identifier of the first cell or sequence information of the first signal indicated by the first cell. In this case, the first signal may be a cell-level reference signal generated based on the cell configuration information of the first cell. For example, the first signal is a sequence (for example, a Zadoff Chu sequence) generated based on a root index. The root index may be equal to a value of the physical cell identifier of the first cell. Alternatively, the root index may be equal to a sequence value of the first signal indicated by the first cell. For example, the first signal is scrambled by using a first scrambling code, and the first scrambling code is generated based on the physical cell identifier of the first cell. The location information of the first cell may include information indicating an area or a location of the first cell, such as global positioning system (global positioning system, GPS) information. In this case, the first signal may be an area-level signal generated based on the location information.

For example, in a predefined or preconfigured manner, the first network device is defined to use a signal A in an area A and use a signal B in a predefined or preconfigured area B. The first network device determines, based on the obtained location information, that the first network device is currently located in the area A, and further determines that the first signal is the signal A corresponding to the area A.

For example, the resource configuration information may include any one or more of the following: frequency-domain resource configuration information indicating a frequency-domain resource for sending or receiving the first signal, time-domain resource configuration information indicating a time-domain resource for sending or receiving the first signal, and code-domain resource configuration information indicating a code-domain resource for sending or receiving the first signal.

Optionally, in step S220, the first network device sends the first configuration information and/or the resource configuration information.

Specifically, as shown in FIG. 2, step S220 includes step S221 and step S225.

S221: Send the first configuration information and/or the resource configuration information to the second network device.

Correspondingly, the second network device receives the first configuration information and/or the resource configuration information from the first network device.

Further, optionally, after receiving the first configuration information and/or the resource configuration information, the second network device may perform step S230 of determining the to-be-received first signal based on the first configuration information and/or the resource configuration information. Alternatively, the second network device attempts to receive or perform detection on the first signal based on the first configuration information and/or the resource configuration information. The second network device may receive or detect the first signal in a manner such as an air interface, and may further receive the first signal from the first terminal device in a manner such as the air interface.

S225: Send the first configuration information and/or the resource configuration information to the first terminal device.

Correspondingly, the first terminal device receives the first configuration information and/or the resource configuration information from the first network device.

Further, after receiving the first configuration information and/or the resource configuration information, the first terminal device determines the first signal, in other words, performs step S240 in the communication method 200 in which the first terminal device determines the first signal. Further, the first terminal device may send the first signal on a first time-domain resource and a first frequency-domain resource.

In this embodiment of this application, the first terminal device may be the air terminal UE1 that belongs to the first cell in the network architecture shown in FIG. 1, or may be a terminal device on the air device such as the satellite or the balloon described above.

A sequence of step S221 and step S225 is not limited in this application. The two steps may be performed sequentially or simultaneously.

Optionally, step S220 may further include: Step S227: The first network device sends third indication information to the first terminal device.

Correspondingly, the first terminal device receives the third indication information from the first network device.

Specifically, the third indication information indicates the first terminal device to send the first signal on the first time-domain resource and the first frequency-domain resource, for example, is for triggering the first terminal device to send the first signal. For example, when sending the first configuration information and/or the resource configuration information in step S225, the first network device may send the third indication information, for example, send the foregoing information by using a same channel resource. For another example, as shown in FIG. 2, the first network device may send the third indication information to the first terminal device by performing step S227 at any moment before the first terminal device performs step S240. A manner of sending the third indication information is not limited in this application.

Optionally, the third indication information may be first information, for example, downlink control information (downlink control information, DCI), for scheduling the second signal; or may be one or more bits carried in the first information (for example, carried in DCI). The first information is for scheduling the first signal. To be specific, the first information may be for scheduling the first network device to send or receive the first signal. Specifically, for example, after receiving the first information, the first network device may first send the first signal by default, and then send or receive the second signal. Therefore, in addition to scheduling the second signal, the first information further has a function of indicating sending of the first signal. For another example, the third indication information may be for triggering the first terminal device to send the first signal on the first time-domain resource and the first frequency-domain resource. In other words, after receiving the third indication information, the first terminal device immediately sends the first signal at an end moment of the third indication information. Specific content of the third indication information is not limited in this application.

Optionally, in step S240, the first terminal device determines the first signal.

Specifically, the first signal indicates that the second signal is sent or received between the first network device and the first terminal device on the second time-domain resource and the second frequency-domain resource.

Optionally, the second signal may be a data signal, for example, a physical downlink shared channel (physical downlink shared channel, PDSCH) signal or a physical uplink shared channel (physical uplink shared channel, PUSCH) signal, or may be a control signal, for example, a physical downlink control channel (physical downlink control channel), or may be a reference signal, for example, a positioning reference signal (positioning reference signal).

Step S250: The first terminal device sends the first signal on the first time-domain resource and the first frequency-domain resource.

Optionally, the second network device may receive or detect the first signal from the first terminal device on the first time-domain resource and the first frequency-domain resource. The second network device may be any network device that can receive or detect the first signal. In this embodiment of this application, a signal may be sent and received between the second network device and the first terminal device through an air interface. In comparison with information exchange between cell stations, information exchange through the air interface achieves a lower delay. The first signal indicates that the second signal is sent or received between the first network device and the first terminal device on the second time-domain resource and the second frequency-domain resource. To be specific, if the first terminal device sends the first signal, it indicates that the second signal is sent or received between the first network device and the first terminal device on the second time-domain resource and the second frequency-domain resource; or if the first terminal device does not send the first signal, it indicates that the first signal is not sent or received between the first network device and the first terminal device on the second time-domain resource or the second frequency-domain resource. In other words, if the second network device detects or receives the first signal, it indicates that the second network device determines that the first signal is sent or received between the first network device and the first terminal device on the second time-domain resource and the second frequency-domain resource; or if the second network device does not detect or receive the first signal, it indicates that the second network device determines that the first signal is not sent or received between the first network device and the first terminal device on the second time-domain resource or the second frequency-domain resource.

It should be understood that, in the second time-domain resource, the second frequency-domain resource is a frequency-domain resource on which the first terminal device does not expect to receive a signal from a network device other than the first network device; or in the second time-domain resource, the first terminal device does not expect to receive a signal from a network device other than the first network device on the second frequency-domain resource.

In this embodiment of this application, the second time-domain resource indicated by the first signal is located after the first time-domain resource in step S250. Specifically, the first time-domain resource may be consecutive to the second time-domain resource, in other words, an end moment of the first time-domain resource and a start moment of the second time-domain resource are a same moment. In some other embodiments of this application, an interval between end time of the first time-domain resource and start time of the second time-domain resource may be one or more time units, and the one or more time units may be predefined or may be determined based on a configuration parameter. The following describes the first time-domain resource and the second time-domain resource in detail. Details are not described herein.

In this embodiment of this application, a frequency range of the first frequency-domain resource may include a frequency range of the second frequency-domain resource, in other words, a frequency range of a frequency-domain resource of the first signal may include a frequency range of a frequency-domain resource of the second signal. The following describes the first time-domain resource and the second time-domain resource in detail. Details are not described herein.

Step S260: The second network device determines, based on the first signal, signal sending or receiving between the second network device and a second terminal device on the second time-domain resource and the second frequency-domain resource.

Specifically, after receiving the first signal on the first time-domain resource and the first frequency-domain resource, the second network device determines, based on the second time-domain resource and the second frequency-domain resource that are indicated in the first signal, signal sending or receiving between the second network device and the second terminal device on the second time-domain resource and the second frequency-domain resource. The second cell may include the second terminal device that causes interference to sending or receiving of the second signal, in other words, a signal sent or received by the second terminal device in the second cell causes interference to the second signal.

It should be understood that a signal between the second network device and the second terminal device may be any signal, or may be a signal that can be dynamically scheduled, or may be a signal that is periodically sent or received.

Optionally, that the second network device determines signal sending or receiving between the second network device and the second terminal device on the second time-domain resource and the second frequency-domain resource is specifically: The second network device may send first indication information, where the first indication information indicates to stop or cancel sending or receiving a third signal between the second network device and the second terminal device on the second time-domain resource and the second frequency-domain resource. Correspondingly, the second terminal device stops or cancels, based on the first indication information, sending or receiving the third signal on the second time-domain resource and the second frequency-domain resource. To be specific, if the second network device receives the first signal on the first time-domain resource and the first frequency-domain resource, the second network device may send the first indication information; or if the second network device does not receive the first signal on the first time-domain resource or the first frequency-domain resource, the second network device does not send the first indication information.

Optionally, that the second network device determines signal sending or receiving between the second network device and the second terminal device on the second time-domain resource and the second frequency-domain resource is specifically: The second network device may send second indication information, where the second indication information indicates to adjust a space domain transmission configuration of a third signal. For example, after receiving the second indication information, the second terminal device may adjust the space domain transmission configuration of the third signal, for example, a precoding matrix, a space domain filter, or a beam of the third signal. Correspondingly, the second terminal device may adjust the space domain transmission configuration of the third signal based on the second indication information. For another example, before receiving the second indication information, the second terminal device determines that the space domain transmission configuration of the third signal is a first space domain transmission configuration, for example, a first precoding matrix; and after receiving the second indication information, the second terminal device determines that the space domain transmission configuration of the third signal is a second space domain transmission configuration, for example, a second precoding matrix. Therefore, in other words, the second indication information indicates the second space domain transmission configuration of the third signal on a fourth time-domain resource, a total sending or receiving time period of the second signal is the second time-domain resource, the fourth time-domain resource is a part of the second time-domain resource, and a space domain transmission configuration of the second signal on the fourth time-domain resource is the second space domain transmission configuration. Before the fourth time-domain resource, the space domain transmission configuration of the second signal may be the first space domain transmission configuration, and the first space domain transmission configuration may be different from the second space domain transmission configuration. To be specific, if the second network device receives the first signal on the first time-domain resource and the first frequency-domain resource, the second network device may send the second indication information; or if the second network device does not receive the first signal on the first time-domain resource, the second network device does not send the second indication information.

Optionally, that the second network device determines signal sending or receiving between the second network device and the second terminal device on the second time-domain resource and the second frequency-domain resource is specifically: The second network device may alternatively send a fourth indication message, where the fourth indication message indicates to determine to skip signal sending or receiving between the second network device and the second terminal device on the second time-domain resource and the second frequency-domain resource. In this way, signal sending or receiving causing interference to the second signal can be avoided between the second network device and the second terminal device on the second time-domain resource and the second frequency-domain resource. To be specific, if the second network device receives the first signal on the first time-domain resource, the second network device may determine to skip signal sending or receiving between the second network device and the second terminal device on the second time-domain resource and the second frequency-domain resource; or if the second network device does not receive the first signal on the first time-domain resource, the second network device may send or receive a signal between the second network device and the second terminal device on the second time-domain resource and the second frequency-domain resource.

It should be noted that the step of sending the first indication information, the second indication information, or the fourth indication information by the second network device may be used to replace step S260. In other words, step S260 performed by the second network device is any step of sending the first indication information, the second indication information, or the fourth indication information to the second terminal device by the second network device.

Optionally, the communication method 200 may further include: Step S270: The first terminal device sends or receives the second signal on the second time-domain resource and the second frequency-domain resource. In other words, the first terminal device has a requirement for sending or receiving the second signal. It should be understood that the first signal indicates that the second signal is sent or received between the first network device and the first terminal device on the second time-domain resource and the second frequency-domain resource. Therefore, after the first terminal device sends the first signal on the first time-domain resource and the first frequency-domain resource, the first terminal device may further send or receive the second signal on the second time-domain resource and the second frequency-domain resource. To be specific, if the first terminal device sends the first signal on the first time-domain resource and the first frequency-domain resource, the first terminal device also sends or receives the second signal on the second time-domain resource and the second frequency-domain resource; or if the first terminal device does not send the first signal on the first time-domain resource or the first frequency-domain resource, the first terminal device does not send or receive the second signal on the second time-domain resource or the second frequency-domain resource.

The following specifically describes an interaction procedure between any two communication devices in the communication method 200 with reference to Embodiment 2 to Embodiment 4. For detailed descriptions of features in solutions in Embodiment 2 to Embodiment 4, refer to Embodiment 1; or for features in Embodiment 2 to Embodiment 4 that are the same as those in Embodiment 1, for example, the first signal, the first configuration information, and the resource configuration information, refer to Embodiment 1. Details are not described herein.

### Embodiment 2

FIG. 4 is an interaction flowchart of a communication method 400. As shown in FIG. 4, the communication method S400 includes step S410 to step S470. For descriptions of step S410 to step S470, refer to step S210 to step S270.

Step S410: A first network device obtains first configuration information and/or resource configuration information.

For step S410, refer step S210 in Embodiment 1. For the first configuration information and/or the resource configuration information in step S410, refer to the descriptions in Embodiment 1. As described above, the first configuration information may include cell configuration information and/or location information of a first cell, for determining a first signal. The resource configuration information indicates a first resource, that is, the first time-domain resource and the first frequency-domain resource described above. The first resource is used by a first terminal device to send the first signal, and the first resource is used by a second network device to receive the first signal.

Step S425: The first network device sends the first configuration information and/or the resource configuration information to the first terminal device.

For step S425, refer to step S225 in Embodiment 1. Correspondingly, the first terminal device receives the first configuration information and/or the resource configuration information from the first network device.

Optionally, the communication method 400 may further include: Step S427: The first network device sends third indication information to the first terminal device.

For step S427, refer to step S227 in Embodiment 1. For the third indication information, refer to the descriptions in Embodiment 1. Correspondingly, the first terminal device receives the third indication information from the first network device. Specifically, the third indication information indicates the first terminal device to send the first signal on the first time-domain resource and the first frequency-domain resource, for example, is for triggering the first terminal device to send the first signal. The first signal indicates that a second signal is sent or received between the first network device and the first terminal device on a second time-domain resource and a second frequency-domain resource.

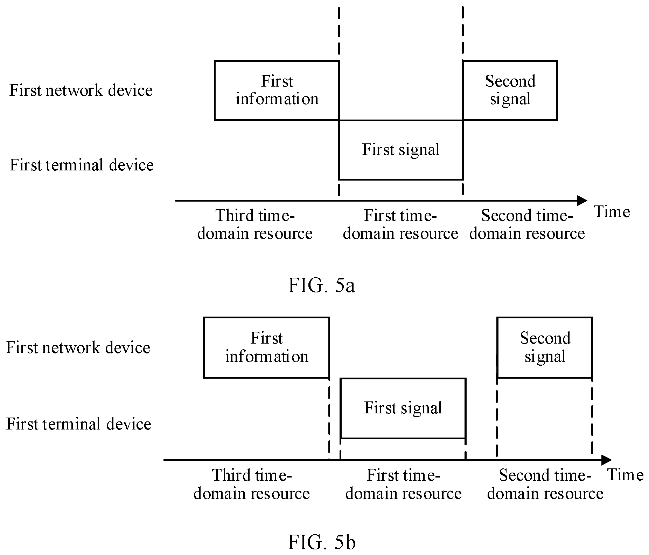

FIG. 5a and FIG. 5b are diagrams of a time-domain resource for sending the third indication information. The third indication information may be first information, for example, DCI, sent by the first network device, or the third indication information may be carried in the first information. As shown in FIG. 5a and FIG. 5b, the first network device may schedule the second signal by using the first information. After receiving the first information sent by the first network device, the first terminal device sends the first signal on the first time-domain resource and the first frequency-domain resource. In the embodiment shown in FIG. 5a and FIG. 5b, the first network device sends the second signal to the first terminal device on the second time-domain resource and the second frequency-domain resource. Correspondingly, the first terminal device receives the first signal from the first network device on the second time-domain resource and the second frequency-domain resource.

As shown in FIG. 5a, the first time-domain resource and the second time-domain resource may be consecutive, and sending or receiving of the first information and sending or receiving of the first signal may also be consecutive, or the first information is for triggering sending of the first signal on the first time-domain resource and the first frequency-domain resource. As shown in FIG. 5b, an interval between end time of the first time-domain resource and start time of the second time-domain resource may be at least one time unit, for example, one symbol or one slot. Optionally, an interval between end time of the first information and start time of the first signal may also be at least one time unit.

Optionally, the first time-domain resource may include one or more first time units, and the first time unit may be a symbol (for example, an OFDM symbol). Alternatively, the first time unit may be another time unit. This is not limited in this patent.

Optionally, the second time-domain resource may be a scheduling time period in which the second signal is received or sent once. An example in which the second signal is a PDSCH/PUSCH signal is used. If a scheduling time-domain resource of the PDSCH/PUSCH signal is L to L+K symbols in a first slot, the second time-domain resource is the L to L+K symbols in the first slot.

Optionally, the second time-domain resource may be a predefined or preconfigured time window, and the first signal may be sent or received once or a plurality of times in the time window. For example, the time window may include one or more second time units, and the second time unit may be a slot, a symbol, or ms. For another example, the time window may include J slots. If the second signal is a PDSCH signal, the PDSCH signal is sent or received once in one slot, and the first signal may be sent or received up to J times in the time window.

The following describes embodiments of the first time-domain resource and the second time-domain resource in detail. Details are not described herein.

Step S440: The first terminal device determines the first signal.

For step S440, refer to step S240 in Embodiment 1. For the first signal in step S440, refer to the descriptions in Embodiment 1. Specifically, the first terminal device determines the first signal based on the received first configuration information and/or resource configuration information. The first signal indicates that the second signal is sent or received between the first network device and the first terminal device on the second time-domain resource and the second frequency-domain resource.

Step S450: The first terminal device sends the first signal on the first time-domain resource and the first frequency-domain resource.

For step S450, refer to step S250 in Embodiment 1. Optionally, the second network device may receive, in a second cell, the first signal from the first terminal device on the first time-domain resource and the first frequency-domain resource.

Optionally, the communication method 400 may further include: Step S470: The first terminal device sends or receives the second signal on the second time-domain resource and the second frequency-domain resource. In other words, the first terminal device has a requirement for sending or receiving the second signal in the first cell on the second time-domain resource and the second frequency-domain resource. Correspondingly, the first network device may receive or send the second signal on the second time-domain resource and the second frequency-domain resource. For step S470, refer to step S270 in Embodiment 1.

### Embodiment 3

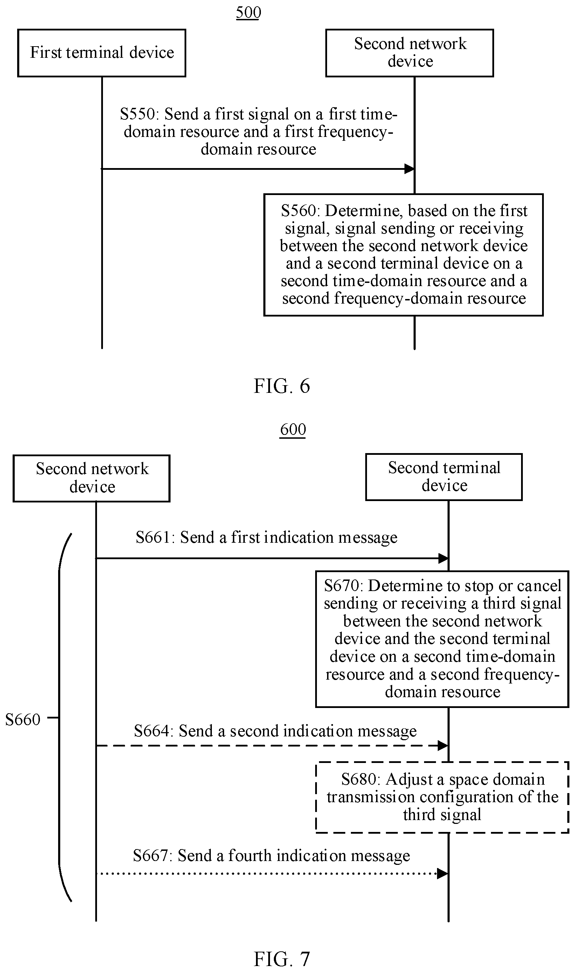

FIG. 6 is an interaction flowchart of a communication method 500. As shown in FIG. 3, the second network device may not establish a communication connection to the first terminal device, in other words, the second network device does not serve the first terminal device. As shown in FIG. 6, the communication method 500 includes step S550 and step S560.

Step S550: The first terminal device sends a first signal on a first time-domain resource and a first frequency-domain resource.

For step S550, refer to step S250 in Embodiment 1. Correspondingly, the second network device receives the first signal from the first terminal device on the first time-domain resource and the first frequency-domain resource. The first signal indicates that a second signal in a first cell is sent or received on a second time-domain resource and a second frequency-domain resource. In this embodiment of this application, a signal may be sent and received between the first terminal device and the second network device through an air interface. In comparison with information exchange between cell stations, information exchange through the air interface achieves a lower delay.

Step S560: The second network device determines, based on the first signal, signal sending or receiving between the second network device and a second terminal device on the second time-domain resource and the second frequency-domain resource.

For step S560, refer to step S260 in Embodiment 1. Specifically, after receiving the first signal on the first time-domain resource and the first frequency-domain resource, the second network device determines, based on the second time-domain resource and the second frequency-domain resource that are indicated in the first signal, signal sending or receiving between the second network device and the second terminal device on the second time-domain resource and the second frequency-domain resource. A second cell may include the second terminal device that causes interference to sending or receiving of the second signal in the first cell. A third signal sent or received by the second terminal device in the second cell causes interference to the second signal.

### Embodiment 4

FIG. 7 is an interaction flowchart of a communication method 600. The communication method 600 is an interaction procedure between a second network device and a second terminal device. The communication method 600 is performed after step S250 shown in FIG. 2 or S550 shown in FIG. 6. To be specific, a specific implementation of step 560 is performed by the second network device after receiving the first signal on the first time-domain resource. As shown in FIG. 7, the communication method 600 includes step S660 to step S680.

Step S660: The second network device determines, based on the first signal, signal sending or receiving between the second network device and the second terminal device on a second time-domain resource and a second frequency-domain resource.

Specifically, as shown in FIG. 6, step S660 may be any one of step S661, step S664, and step S667. In other words, any one of step S661, step S664, and step S667 may be for replacing step S660 or the foregoing step S260.

Step S661: The second network device sends first indication information to the second terminal device.

Specifically, the first indication information indicates the second terminal device to stop or cancel sending or receiving a third signal in a second cell on the second time-domain resource and the second frequency-domain resource. In other words, the second terminal device has a requirement for sending or receiving the third signal before sending or receiving a second signal. For a specific solution of the first indication information, refer to the descriptions in Embodiment 1.

Correspondingly, the second terminal device receives the first indication information from the second network device.

Further, in step S670, the second terminal device stops or cancels, based on the first indication information, sending or receiving the third signal on the second time-domain resource and the second frequency-domain resource.

Step S664: The second network device sends second indication information to the second terminal device.

Specifically, the second indication information indicates the second terminal device to adjust a space domain transmission configuration of a third signal in a second cell on the second time-domain resource and the second frequency-domain resource. For a specific solution of the second indication information, refer to the descriptions in Embodiment 1.

Correspondingly, the second terminal device receives the second indication information from the second network device.

Further, in step S680, the second terminal device adjusts the space domain transmission configuration of the third signal in the second cell based on the second indication information. Optionally, the space domain transmission configuration may include a precoding matrix, a space domain filter, a beam, or the like of the third signal.

Step S667: The second network device sends fourth indication information to the second terminal device.

Specifically, the fourth indication information indicates the second terminal device not to send or receive a signal in a second cell on the second time-domain resource or the second frequency-domain resource. For a specific solution of the fourth indication information, refer to the descriptions in Embodiment 1.

Correspondingly, the second terminal device receives the fourth indication information from the second network device. Further, the second terminal device does not send or receive a signal in the second cell on the second time-domain resource or the second frequency-domain resource based on the fourth indication information.

In the communication method in this application, when the first terminal device has a requirement for sending or receiving the second signal, the first terminal device may first send the first signal, so that a communication device that is in another cell and that causes interference to the first cell, for example, the second network device, can identify, based on the first signal, the requirement for sending or receiving the second signal, and adjust signal sending or receiving in the cell, to implement interference avoidance, thereby ensuring that data sending or receiving of the second signal is not interfered with. In addition, in a ground-to-air transmission scenario of air communication, information exchange is performed between communication devices through an air interface, and a delay is lower.

The following describes implementations of the first frequency-domain resource and the second frequency-domain resource in the communication method 200 in detail with reference to Embodiment 5 and Embodiment 6.

### Embodiment 5

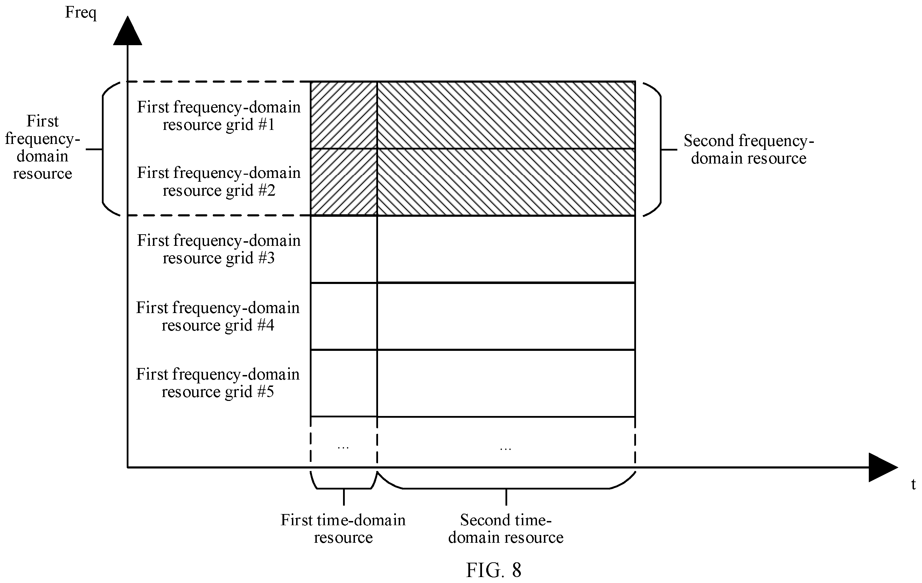

FIG. 8 is a diagram of a first frequency-domain resource and a second frequency-domain resource that are applicable to Embodiment 5. In this embodiment of this application, the first cell shown in FIG. 3 may include a first transmission bandwidth, and the first transmission bandwidth may be all or a part of frequency-domain resources of the first cell. For example, all of the frequency-domain resources of the first cell are 20 resource blocks, and the first transmission bandwidth may include the 20 resource blocks. The frequency-domain resources of the first transmission bandwidth may include K first frequency-domain resource grids (resource grids). For example, the K first frequency-domain resource grids may be a first frequency-domain resource grid #1 to a first frequency-domain resource grid #5 shown in FIG. 8. The first transmission bandwidth is divided into K non-overlapping frequency-domain resources by classifying the first frequency-domain resource grids.

For example, the first transmission bandwidth may include 20 resource blocks (resource blocks, RBs) numbered as an RB #0 to an RB #19. The 20 resource blocks may be classified into five first frequency-domain resource grids numbered as the first frequency-domain resource grid #1 to the first frequency-domain resource grid #5 shown in FIG. 8. Each first frequency-domain resource grid includes four RBs. To be specific, the first frequency-domain resource grid #1 includes the RB #0 to the RB #3; the first frequency-domain resource grid #2 includes the RB #4 to the RB #7; and so on.

In step S250, the first terminal device sends the first signal on the first time-domain resource and the first frequency-domain resource. The first frequency-domain resource may be M first frequency-domain resource grids in the K first frequency-domain resource grids, where M is a positive integer less than or equal to K. In other words, the first terminal device sends the first signal on the first time-domain resource and a frequency-domain resources of the M first frequency-domain resource grids in the K first frequency-domain resource grids. As shown in FIG. 8, the M first frequency-domain resource grids may be the first frequency-domain resource grid #1 and the first frequency-domain resource grid #2. In some other embodiments of this application, the M first frequency-domain resource grids may alternatively be a plurality of non-consecutive first frequency-domain resource grids, for example, may be the first frequency-domain resource grid #1 and the first frequency-domain resource grid #3.

The first signal indicates that a second signal in the first cell is sent or received on a second time-domain resource and the second frequency-domain resource. The second frequency-domain resource may include N first frequency-domain resource grids in the M first frequency-domain resource grids, where N is less than or equal to M. For example, as shown in FIG. 8, a frequency range of the second frequency-domain resource may be the same as a frequency range of the first frequency-domain resource. In other words, the second frequency-domain resource is the first frequency-domain resource grid #1 and the first frequency-domain resource grid #2. For another example, a frequency range of the second frequency-domain resource may be a part of that of the first frequency-domain resource. In other words, a frequency range of the second frequency-domain resource includes the N first frequency-domain resource grids in the first frequency-domain resource. A solution in which N is less than M is described in the following Embodiment 6. Details are not described herein.

It should be understood that, for the first terminal device in step S250, the first frequency-domain resource grid is a scheduling granularity for the second signal. In other words, at a granularity of one first frequency-domain resource grid, the first network device schedules the second frequency-domain resource (that is, a frequency-domain resource included in the N first frequency-domain resource grids) for the first terminal device, and sends or receives the second signal.

Further, the first frequency-domain resource grid is a sending granularity for the first signal. In other words, the first network device sends the first signal on the first frequency-domain resource (that is, a frequency-domain resource included in the M first frequency-domain resource grids) at a granularity of one first frequency-domain resource grid.

Correspondingly, for the second network device in step S260, the first frequency-domain resource grid is a detection granularity for the first signal. In other words, the second network device performs detection on the first signal in each of the M first frequency-domain resource grids at a granularity of one first frequency-domain resource grid. Alternatively, the first signal is a set of M signals detected by the second network device on the M first frequency-domain resource grids at a granularity of one first frequency-domain resource grid. The second network device receives or detects the first signal on the first time-domain resource and the first frequency-domain resource, and further determines, in step S260, signal sending or receiving between the second network device and the second terminal device on the second time-domain resource and the second frequency-domain resource.

As shown in FIG. 8, the first terminal device may learn that the second network device performs detection on the first signal at a granularity of the first frequency domain grid, and in this case, the first terminal device may also send the first signal on the first time-domain resource and the first frequency-domain resource grid #1 and the first frequency-domain resource grid #2 at a granularity of the first frequency-domain resource grid. In addition, the first network device schedules, by using the first frequency-domain resource grid as a scheduling granularity, the first terminal device to send or receive the second signal on the second time-domain resource and the first frequency-domain resource grid #1 and the first frequency-domain resource grid #2. The second network device performs detection on the first signal separately on the first time-domain resource and the first frequency-domain resource grid #1 to the first frequency-domain resource grid #5 by using the first frequency-domain resource grid as a detection granularity. If the second network device detects the first signal on the first time-domain resource and the first frequency-domain resource grid #1 and the first frequency-domain resource grid #2, the second network device learns that the first network device sends or receives the second signal on the second time-domain resource and the first frequency-domain resource grid #1 and the first frequency-domain resource grid #2.

Optionally, the first frequency-domain resource grid is a generation granularity for the first signal. In other words, the first signal is a set of M signals generated by the first terminal device on the M first frequency-domain resource grids at a granularity of one first frequency-domain resource grid. As shown in FIG. 8, the first signal is a set of two signals generated by the first terminal device on the first frequency-domain resource grid #1 and the first frequency-domain resource grid #2.

### Embodiment 6

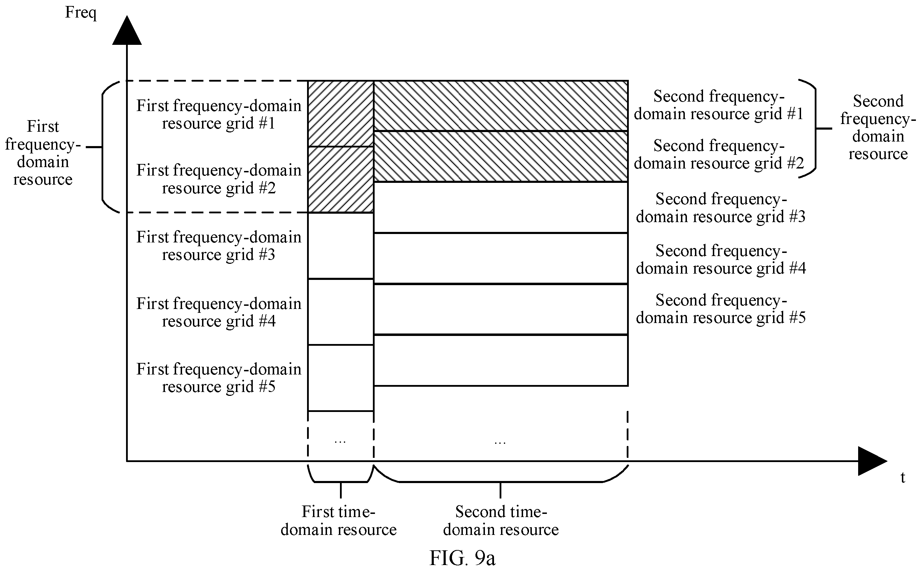

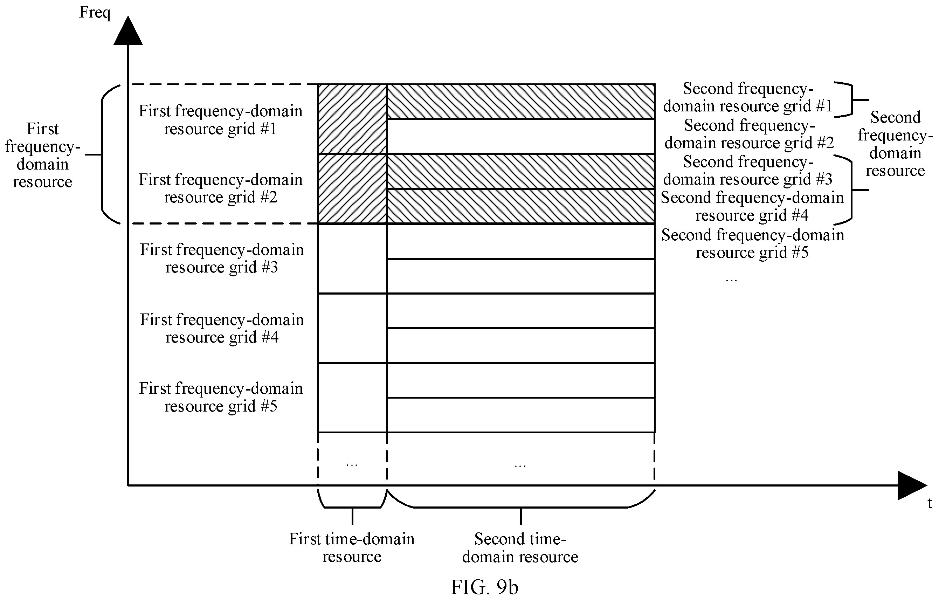

FIG. 9a and FIG. 9b are diagrams of a first frequency-domain resource and a second frequency-domain resource that are applicable to Embodiment 6. Similar to Embodiment 5, in this embodiment of this application, the first cell shown in FIG. 3 may include a first transmission bandwidth, and the first transmission bandwidth may be all or a part of frequency-domain resources of the first cell. For example, all of the frequency-domain resources of the first cell are 20 resource blocks, and the first transmission bandwidth may include the 20 resource blocks. The frequency-domain resources of the first transmission bandwidth may include K first frequency-domain resource grids (resource grids). For example, the K first frequency-domain resource grids may be a first frequency-domain resource grid #1 to a first frequency-domain resource grid #5 shown in FIG. 8, and each first frequency-domain resource grid may include one or more RBs.

In Embodiment 6, the first transmission bandwidth may be further classified into X second frequency-domain resource grids. As shown in FIG. 9a, the second frequency-domain resource grid may be obtained in a division manner different from that for the first frequency-domain resource grid, to be specific, a second frequency-domain resource grid #1 to a second frequency-domain resource grid #5 and the like shown in FIG. 9a. As shown in FIG. 9b, the second frequency-domain resource grid may be obtained by further dividing the first frequency-domain resource grid. For example, frequency-domain resources in the first frequency-domain resource grid shown in FIG. 9b are further divided into two second frequency-domain resource grids. The first transmission bandwidth is further divided into X non-overlapping frequency-domain resources by classifying the second frequency-domain resource grids.

Same as the descriptions in Embodiment 5, in step S250, the first terminal device sends the first signal on the first time-domain resource and the first frequency-domain resource, where the first frequency-domain resource may be M first frequency-domain resource grids in the K first frequency-domain resource grids. As shown in FIG. 9a and FIG. 9b, the M first frequency-domain resource grids may be the first frequency-domain resource grid #1 and the first frequency-domain resource grid #2. In some other embodiments of this application, the M first frequency-domain resource grids may alternatively be a plurality of non-consecutive first frequency-domain resource grids, for example, may be the first frequency-domain resource grid #1 and the first frequency-domain resource grid #3.

The first signal indicates that a second signal in the first cell is sent or received on a second time-domain resource and the second frequency-domain resource. The second frequency-domain resource may include L second frequency-domain resource grids in the X second frequency-domain resource grids, where L is less than or equal to X. For example, as shown in FIG. 9a, a frequency range of the second frequency-domain resource may be the second frequency-domain resource grid #1 and the second frequency-domain resource grid #2. As shown in FIG. 9b, when the second frequency-domain resource grid is obtained by further dividing the first frequency-domain resource grid, the frequency range of the second frequency-domain resource may be a part or all of frequency ranges of the M first frequency-domain resources, for example, the second frequency-domain resource may be the second frequency-domain resource grid #1, the second frequency-domain resource grid #3, and the second frequency-domain resource grid #4, or the second frequency-domain resource is a part of the frequency-domain resources in the first frequency-domain resource grid #1 and all frequency-domain resources in the first frequency-domain resource grid #2. In other words, the second frequency-domain resource in Embodiment 5 may include N first frequency-domain resource grids (including the first frequency-domain resource grid #2 shown in FIG. 9b) in the M first frequency-domain resource grids.

It should be understood that, for the first terminal device in step S250, the second frequency-domain resource grid is a scheduling granularity for the second signal. In other words, at a granularity of one second frequency-domain resource grid, the first network device schedules the second frequency-domain resource (that is, a frequency-domain resource included in the L second frequency-domain resource grids) for the first terminal device, and sends the second signal.

The first frequency-domain resource grid is a sending granularity for the first signal. In other words, the first network device sends the first signal on the first frequency-domain resource (that is, a frequency-domain resource included in the M first frequency-domain resource grids) at a granularity of one first frequency-domain resource grid.

Correspondingly, for the second network device in step S260, the first frequency-domain resource grid is a detection granularity for the first signal. In other words, the second network device performs detection on the first signal in each of the M first frequency-domain resource grids at a granularity of one first frequency-domain resource grid. Alternatively, the first signal is a set of M signals detected by the second network device on the M first frequency-domain resource grids at a granularity of one first frequency-domain resource grid. The second network device receives or detects the first signal on the first time-domain resource and the first frequency-domain resource, and further determines, in step S260, signal sending or receiving between the second network device and the second terminal device on the second time-domain resource and the second frequency-domain resource.

As shown in FIG. 9a, the first terminal device may learn that the second network device performs detection on the first signal at a granularity of the first frequency domain grid, and in this case, the first terminal device may also send the first signal on the first time-domain resource and the first frequency-domain resource grid #1 and the first frequency-domain resource grid #2 at a granularity of the first frequency-domain resource grid. In addition, the first network device schedules, by using the second frequency-domain resource grid as a scheduling granularity, the first terminal device to send or receive the second signal on the second time-domain resource and the second frequency-domain resource grid #1 and second frequency-domain resource grid #2. The second network device performs detection on the first signal separately on the first time-domain resource and the first frequency-domain resource grid #1 to the first frequency-domain resource grid #5 by using the first frequency-domain resource grid as a detection granularity. If the second network device detects the first signal on the first time-domain resource and the first frequency-domain resource grid #1 and the first frequency-domain resource grid #2, the second network device learns that the first network device sends or receives the second signal on the second time-domain resource and the second frequency-domain resource grid #1 and the second frequency-domain resource grid #2.

As shown in FIG. 9b, the first terminal device may learn that the second network device performs detection on the first signal at a granularity of the first frequency domain grid, and in this case, the first terminal device may also send the first signal on the first time-domain resource and the first frequency-domain resource grid #1 and the first frequency-domain resource grid #2 at a granularity of the first frequency-domain resource grid. In addition, the first network device schedules, by using the second frequency-domain resource grid as a scheduling granularity, the first terminal device to send or receive the second signal on the second time-domain resource and the second frequency-domain resource grid #1, the second frequency-domain resource grid #3, and the second frequency-domain resource grid #4. The second network device performs detection on the first signal separately on the first time-domain resource and the first frequency-domain resource grid #1 to the first frequency-domain resource grid #5 by using the first frequency-domain resource grid as a detection granularity. If the second network device detects the first signal on the first time-domain resource and the first frequency-domain resource grid #1 and the first frequency-domain resource grid #2, the second network device learns that the first network device sends or receives the second signal on the second time-domain resource and the second frequency-domain resource grid #1, the second frequency-domain resource grid #3, and the second frequency-domain resource grid #4.

Optionally, the first frequency-domain resource grid is a generation granularity for the first signal. In other words, the first signal is a set of M signals generated by the first terminal device on the M first frequency-domain resource grids at a granularity of one first frequency-domain resource grid. As shown in FIG. 9a and FIG. 9b, the first signal is a set of two signals generated by the first terminal device on the first frequency-domain resource grid #1 and the first frequency-domain resource grid #2.

Optionally, in step 260, there are correspondences between different types of first signals carried in one of the first frequency-domain resource grids and different quantities of the second frequency-domain resource grids. Table 1 shows correspondences existing in the first frequency-domain resource grid #1. For example, in the scenario shown in FIG. 9a and FIG. 9b, one first frequency-domain resource grid may correspond to a plurality of types of first signals, and the plurality of types of first signals respectively indicate that the second signal is sent or received on different quantities of the second frequency-domain resource grids. The second network device further determines, based on the types of the first signals received on the first time-domain resource and the first frequency-domain resource, the frequency range of the second frequency-domain resource or specific second frequency-domain resource grids included in the second frequency-domain resource.

**Table 1**

| First signal a | Second frequency-domain resource grid for sending or receiving the second signal |
|---|---|
| 0 | Second frequency-domain resource grid #0 |
| 1 | Second frequency-domain resource grid #0 and second frequency-domain resource grid #1 |
| 2 | Second frequency-domain resource grid #1 |

As shown in Table 1, there are three types of the first signal: 0 to 2, which respectively indicate that the second signal is sent or received in different quantities of the second frequency-domain resource grids. For example, when the second network device receives the first signal 0 in the first frequency-domain resource grid #1, it indicates that the second signal is sent or received in the second frequency-domain resource grid #0, or it is determined that the second frequency-domain resource includes the second frequency-domain resource grid #0 but does not include the second frequency-domain resource grid #1. Similarly, when the second network device receives the first signal 1 in the first frequency-domain resource grid #1, the second signal is sent or received in the second frequency-domain resource grid #0 and the second frequency-domain resource grid #1, or it is determined that the second frequency-domain resource includes the second frequency-domain resource grid #0 and the second frequency-domain resource grid #1.

Similarly, the first frequency-domain resource grid #2 to the first frequency-domain resource grid #5 may include the correspondences shown in Table 1, so that the second network device may determine, based on the type of the first signal received in the first frequency-domain resource grid #2 to the first frequency-domain resource grid #5, that there is a second frequency-domain resource grid for sending or receiving the second signal in each first frequency-domain resource grid, and finally determine all of the second frequency-domain resource grids included in the second frequency-domain resource.

It should be noted that Embodiment 5 and Embodiment 6 are merely examples. Embodiments of this application may include more first frequency-domain resource grids and more second frequency-domain resource grids, and division of the first frequency-domain resource grid and the second frequency-domain resource grid is not limited in this application.

The following describes implementations of the first time-domain resource and the second time-domain resource in the communication method 200 in detail with reference to Embodiment 7.

### Embodiment 7

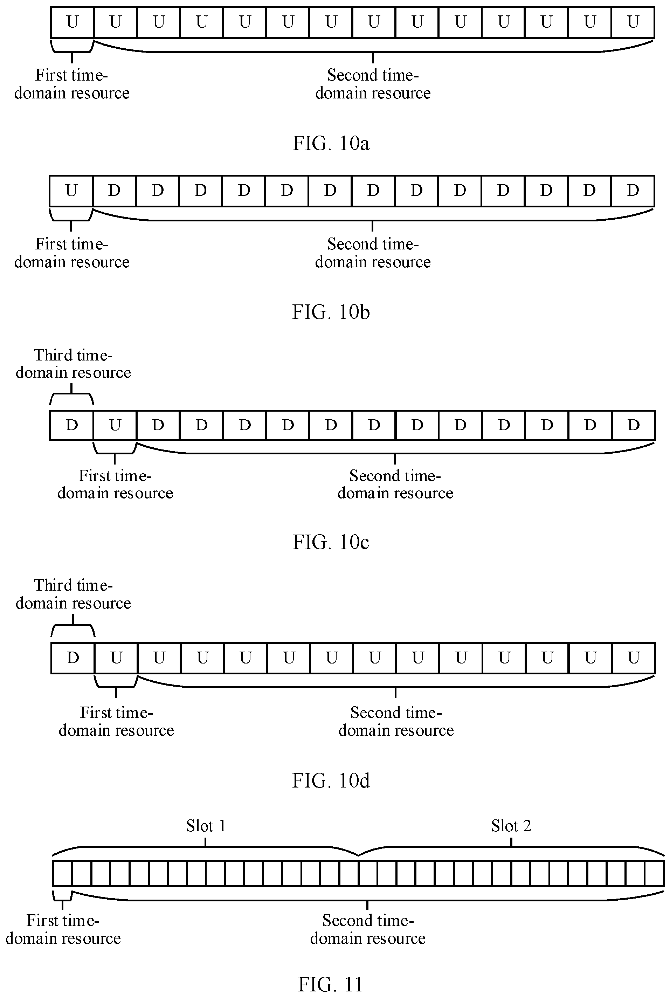

In Embodiment 7, the first time-domain resource and the second time-domain resource may be included in one time unit, and the first time-domain resource is located before the second time-domain resource. Optionally, the time unit may further include a third time-domain resource shown in FIG. 5a and FIG. 5b. The third time-domain resource is located before the first time-domain resource, and is a time period in which the first network device sends the third indication information or the first terminal device receives the third indication information. The third indication information may be first information, for example, DCI, for scheduling sending or receiving of the second signal, or may be carried in the first information. FIG. 10a to FIG. 10d are diagrams of Embodiment 7 when a time unit is a slot.

As shown in FIG. 10a, when the second signal is an uplink signal, the first signal is also an uplink signal. The first time-domain resource and the second time-domain resource occupy 14 symbols in one slot. A location of the first time-domain resource in the slot may be predefined. For example, it is predefined that a 1^{st} OFDM symbol in the slot is the first time-domain resource, and a location of the second time-domain resource in the slot is a 2^{nd} OFDM symbol to a 14^{th} OFDM symbol in the slot.

As shown in FIG. 10b, when the second signal is a downlink signal, the first signal is an uplink signal. The first time-domain resource and the second time-domain resource occupy 14 symbols in one slot. A location of the first time-domain resource in the slot may be predefined. For example, it is predefined that a 1^{st} OFDM symbol in the slot is the first time-domain resource, and a location of the second time-domain resource in the slot is a 2^{nd} OFDM symbol to a 14^{th} OFDM symbol in the slot.

As shown in FIG. 10c, the slot may further include a third time-domain resource. When the second signal is a downlink signal, the first signal is an uplink signal, and the third indication information of the third time-domain resource may be carried in the downlink signal. The third time-domain resource, the first time-domain resource, and the second time-domain resource occupy 14 symbols in one slot. A location of the first time-domain resource in the slot may be predefined. For example, it is predefined that a 2^{nd} OFDM symbol in the slot is the first time-domain resource, a location of the third time-domain resource in the slot is a 1^{st} OFDM symbol, and a location of the second time-domain resource in the slot is a 3^{rd} OFDM symbol to a 14^{th} OFDM symbol in the slot.

As shown in FIG. 10d, the slot may further include a third time-domain resource. When the second signal is an uplink signal, the first signal is also an uplink signal, and the third indication information of the third time-domain resource may be carried in a downlink signal. The third time-domain resource, the first time-domain resource, and the second time-domain resource occupy 14 symbols in one slot. A location of the first time-domain resource in the slot may be a 2^{nd} OFDM symbol, a location of the third time-domain resource in the slot is a 1^{st} OFDM symbol, and a location of the second time-domain resource in the slot is a 3^{rd} OFDM symbol to a 14^{th} OFDM symbol in the slot.

It should be noted that the slots shown in FIG. 10a to FIG. 10d are merely examples, and an interval between the first time-domain resource and the third time-domain resource or an interval between the first time-domain resource and the second time-domain resource may be one or more OFDM symbols.

In some other embodiments of this application, the first time-domain resource may be included in a second time unit, the second time-domain resource may include one or more time units, and the one or more time units may include the second time unit. FIG. 11 is a diagram of another implementation of a first time-domain resource and a second time-domain resource. As shown in FIG. 11, a location of the first time-domain resource in a slot may be predefined. For example, the location of the first time-domain resource in the slot is predefined as a 1^{st} OFDM symbol in a slot 1. The second time-domain resource may include a 2^{nd} OFDM symbol to a 14^{th} OFDM symbol in the slot 1 and all OFDM symbols in a slot 2. It should be understood that, in this manner, the second network device receives the first signal in a time unit in the slot 1, and may determine whether the second signal is sent or received in a plurality of subsequent slots. It should be understood that, as the second time-domain resource extends, time domain overheads of the first signal gradually reduce. For example, in 20 slots, if a length of the second time-domain resource is five slots, in other words, the 20 slots include four second time-domain resources, four first time-domain resources are needed for sending the first signal; or if the length of the second time-domain resource is 10 slots, in other words, the 20 slots include two second time-domain resources, only two first time-domain resources are needed for sending the first signal.

Finally, apparatus embodiments in embodiments of this application are described.

To implement functions in the methods provided in this application, a communication device, for example, a terminal device or a network device may include a hardware structure and/or a software module, and implement the foregoing functions in a form of the hardware structure, the software module, or a combination of the hardware structure and the software module. Whether a function in the foregoing functions is performed by the hardware structure, the software module, or the combination of the hardware structure and the software module depends on particular applications and design constraint conditions of the technical solutions.

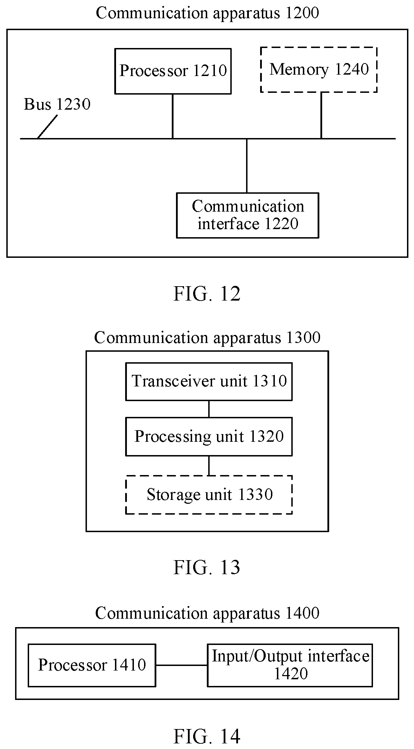

FIG. 12 is a block diagram of a communication apparatus 1200 according to an embodiment of this application. The communication apparatus 1200 includes a processor 1210 and a communication interface 1220. The processor 1210 and the communication interface 1220 may be connected to each other through a bus 1230. The communication apparatus 1200 may be a network device, a terminal device, or the like that performs the communication method 200, 400, 500, or 600.

Optionally, the communication apparatus 1200 may further include a memory 1240. The memory 1240 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 1240 is configured to store related instructions and data.

The processor 1210 may be one or more central processing units (central processing units, CPUs). When the processor 1210 is one CPU, the CPU may be a single-core CPU, or may be a multi-core CPU.

When the communication apparatus 1200 is a first network device, for example, the communication apparatus 1200 is configured to perform the following operation: sending first configuration information and/or resource configuration information.

When the communication apparatus 1200 is a second network device, for example, the communication apparatus 1200 is configured to perform the following operation: determining, based on a first signal, signal sending or receiving between the second network device and a second terminal device on a second time-domain resource and a second frequency-domain resource.

When the communication apparatus 1200 is a first terminal device, for example, the communication apparatus 1200 is configured to perform the following operation: sending a first signal on a first time-domain resource and a first frequency-domain resource.

The foregoing content is merely used as an example for description. When the communication apparatus 1200 is the first network device, the second network device, or the first terminal device, the communication apparatus 1200 is responsible for performing the methods or steps related to the first network device, the second network device, or the first terminal device in the foregoing method embodiments.

The foregoing descriptions are merely examples for description. For specific content, refer to the content shown in the foregoing method embodiments. For implementation of the operations in FIG. 12, refer to corresponding descriptions of the method embodiments shown in FIG. 2, FIG. 4, FIG. 6, and FIG. 7.

FIG. 13 is a block diagram of a communication apparatus 1300 according to an embodiment of this application. The communication apparatus 1300 may be a first network device, a second network device, a first terminal device, or the like, or may be a chip or a module in an apparatus such as the first network device, the second network device, or the first terminal device, and is configured to implement the methods in the foregoing embodiments. The communication apparatus 1300 includes a transceiver unit 1310 and a processing unit 1320. The following describes the transceiver unit 1310 and the processing unit 1320 by using examples.

The transceiver unit 1310 may include a sending unit and a receiving unit. The sending unit is configured to perform a sending action of the communication apparatus. The receiving unit is configured to perform a receiving action of the communication apparatus. For ease of description, in this embodiment of this application, the sending unit and the receiving unit are combined into one transceiver unit. This applies throughout and will not be repeated below.

When the communication apparatus 1300 is the first network device, for example, the transceiver unit 1310 is configured to send first configuration information and/or resource configuration information.

When the communication apparatus 1300 is the second network device, for example, the transceiver unit 1310 is configured to: receive a first signal on a first time-domain resource and a first frequency-domain resource; and so on, and the processing unit 1320 is configured to: determine, based on the first signal, signal sending or receiving between the second network device and a second terminal device on a second time-domain resource and a second frequency-domain resource; and so on.

When the communication apparatus 1300 is the first terminal device, for example, the transceiver unit 1310 is configured to: send a first signal on a first time-domain resource and a first frequency-domain resource; and so on.

The foregoing content is merely used as an example for description. When the communication apparatus 1300 is the first network device, the second network device, or the first terminal device, the communication apparatus 1300 is responsible for performing the methods or steps related to the first network device, the second network device, or the first terminal device in the foregoing method embodiments.

Optionally, the communication apparatus 1300 further includes a storage unit 1330, and the storage unit 1330 is configured to store a program or code for performing the foregoing methods.

The apparatus embodiments shown in FIG. 12 and FIG. 13 are used for implementing the content described in FIG. 2, FIG. 4, FIG. 6, and FIG. 7. For specific execution steps and methods of the apparatuses shown in FIG. 12 and FIG. 13, refer to the content described in the foregoing method embodiments.

FIG. 14 is a block diagram of a communication apparatus 1400 according to an embodiment of this application. The communication apparatus 1400 is configured to implement a function of a first network device, a second network device, or a first terminal device. The communication apparatus 1400 may be a chip in the first network device, the second network device, or the first terminal device.

The communication apparatus 1400 includes an input/output interface 1420 and a processor 1410. The input/output interface 1420 may be an input/output circuit. The processor 1410 may be a signal processor, a chip, or another integrated circuit that can implement the methods in this application. The input/output interface 1420 is configured to input or output a signal or data.

For example, when the communication apparatus 1400 is the first network device, the input/output interface 1420 is configured to send first configuration information and/or resource configuration information.

For example, the communication apparatus 1400 is the second network device, and the input/output interface 1420 is configured to receive a first signal on a first time-domain resource and a first frequency-domain resource. The processor 1410 is configured to: determine, based on the first signal, signal sending or receiving between the second network device and a second terminal device on a second time-domain resource and a second frequency-domain resource; and so on.

For example, when the communication apparatus 1400 is the first terminal device, the input/output interface 1420 is configured to: send a first signal on a first time-domain resource and a first frequency-domain resource; and so on.

In a possible implementation, the processor 1410 executes instructions stored in a memory, to implement a function implemented by a network device or a terminal device.

Optionally, the communication apparatus 1400 further includes the memory.

Optionally, the processor and the memory are integrated together.

Optionally, the memory is outside the communication apparatus 1400.

In a possible implementation, the processor 1410 may be a logic circuit, and the processor 1410 inputs/outputs a message or signaling through the input/output interface 1420. The logic circuit may be a signal processor, a chip, or another integrated circuit that can implement the methods in embodiments of this application.

The foregoing descriptions of the communication apparatus 1400 are merely an example for description. The communication apparatus 1400 can be configured to perform the methods in the foregoing embodiments. For specific content, refer to the descriptions of the foregoing method embodiments. Details are not described herein again.

This application further provides a chip. The chip includes a processor, configured to invoke instructions from a memory and run the instructions stored in the memory, to cause a communication device on which the chip is installed to perform the methods in the foregoing examples.

This application further provides a chip. The chip includes an input interface, an output interface, and a processor. The input interface, the output interface, and the processor are connected through an internal connection path. The processor is configured to execute code in a memory. When the code is executed, the processor is configured to perform the methods in the foregoing examples. Optionally, the chip further includes the memory. The memory is configured to store a computer program or the code.

This application further provides a processor. The processor is configured to be coupled to a memory, and configured to perform the method and the function of the network device or the terminal device in any one of the foregoing embodiments.

This application provides a computer program product including instructions. When the computer program product is run on a computer, the methods in the foregoing embodiments are implemented.

This application further provides a computer program. When the computer program is run on a computer, the methods in the foregoing embodiments are implemented.

This application further provides a computer-readable storage medium. The computer-readable storage medium stores a computer program. When the computer program is executed by a computer, the methods in the foregoing embodiments are implemented.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, the disclosed system, apparatuses, and method may be implemented in another manner. For example, the foregoing described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. A part or all of the units may be selected based on actual requirements to achieve the objectives of the technical solutions of embodiments of this application.

In addition, functional units in embodiments of this application may be integrated into one processing unit, or each unit may exist alone physically, or two or more units may be integrated into one unit.

When functions are implemented in the form of a software functional unit and sold or used as an independent product, the functions may be stored in a computer-readable storage medium. Based on such an understanding, the technical solutions of embodiments of this application essentially, or the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the method embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of this application shall be subject to the protection scope of the claims.

## Claims

1. A communication method, applied to a second network device or an apparatus located in the second network device, and comprising:
receiving, on a first time-domain resource and a first frequency-domain resource, a first signal sent by a first terminal device, wherein the first signal indicates that a second signal is sent or received between a first network device and the first terminal device on a second time-domain resource and a second frequency-domain resource; and
determining, based on the first signal, signal sending or receiving between the second network device and a second terminal device on the second time-domain resource and the second frequency-domain resource.

2. The method according to claim 1, wherein the first signal is a reference signal.

3. The method according to claim 1 or 2, wherein a frequency range of the first frequency-domain resource comprises a frequency range of the second frequency-domain resource.

4. The method according to any one of claims 1 to 3, wherein the first frequency-domain resource comprises M first frequency-domain resource grids, the second frequency-domain resource comprises N first frequency-domain resource grids in the M first frequency-domain resource grids, and N is less than or equal to M.

5. The method according to claim 4, wherein the first frequency-domain resource grid is a detection granularity for the first signal, and the first frequency-domain resource grid is a scheduling granularity for the second signal.

6. The method according to claim 3, wherein the first frequency-domain resource comprises M first frequency-domain resource grids, the second frequency-domain resource comprises L second frequency-domain resource grids, the first frequency-domain resource grid is a detection granularity for the first signal, and the second frequency-domain resource grid is a scheduling granularity for the second signal.

7. The method according to claim 6, wherein each of the M first frequency-domain resource grids comprises a plurality of second frequency-domain resource grids.

8. The method according to claim 7, wherein there are correspondences between different types of first signals carried in one of the first frequency-domain resource grids and different quantities of the second frequency-domain resource grids.

9. The method according to any one of claims 1 to 8, wherein the determining signal sending or receiving between the second network device and the second terminal device on the second time-domain resource and the second frequency-domain resource is specifically:
sending first indication information, wherein the first indication information indicates to stop or cancel sending or receiving a third signal between the second network device and the second terminal device on the second time-domain resource and the second frequency-domain resource.

10. The method according to any one of claims 1 to 8, wherein the determining signal sending or receiving between the second network device and the second terminal device on the second time-domain resource and the second frequency-domain resource is specifically:
sending second indication information, wherein the second indication information indicates to adjust a space domain transmission configuration of a third signal between the second network device and the second terminal device on the second frequency-domain resource, and the space domain transmission configuration comprises at least one of a precoding matrix, a space domain filter, or a beam of the third signal.

11. The method according to any one of claims 1 to 8, wherein the determining signal sending or receiving between the second network device and the second terminal device on the second time-domain resource and the second frequency-domain resource is specifically:
determining to skip signal sending or receiving between the second network device and the second terminal device on the second time-domain resource and the second frequency-domain resource.

12. The method according to any one of claims 1 to 11, wherein an interval between end time of the first time-domain resource and start time of the second time-domain resource is J time units, and J is a positive integer.

13. The method according to any one of claims 1 to 12, wherein the first time-domain resource and the second time-domain resource are comprised in a first time unit; or the first time-domain resource is comprised in a second time unit, and the second time-domain resource comprises a plurality of time units.

14. A communication method, applied to a first terminal device or an apparatus located in the first terminal device, and comprising:
sending a first signal on a first time-domain resource and a first frequency-domain resource, wherein the first signal indicates that a second signal is sent or received between a first network device and the first terminal device on a second time-domain resource and a second frequency-domain resource; and
sending or receiving the second signal on the second time-domain resource and the second frequency-domain resource.

15. The method according to claim 14, wherein the method further comprises:
receiving, on a third time-domain resource, third indication information sent by the first network device, wherein the third indication information indicates the first terminal device to send the first signal on the first time-domain resource and the first frequency-domain resource, and the third time-domain resource is located before the first time-domain resource.

16. The method according to claim 15, wherein the third indication information is carried in first information, and the first information is for scheduling the second signal; or the third indication information is further for scheduling the second signal.

17. The method according to any one of claims 14 to 16, wherein in the second time-domain resource, the second frequency-domain resource is a frequency-domain resource on which the first terminal device does not expect to receive a signal from a network device other than the first network device; or in the second time-domain resource, the first terminal device does not expect to receive a signal from a network device other than the first network device on the second frequency-domain resource.

18. A communication method, comprising:
sending, by a first network device, third indication information to a first terminal device, wherein the third indication information indicates the first terminal device to send a first signal on a first time-domain resource and a first frequency-domain resource, and the first signal indicates that a second signal is sent or received between the first network device and the first terminal device on a second time-domain resource and a second frequency-domain resource;
sending, by the first terminal device, the first signal on the first time-domain resource and the first frequency-domain resource based on the third indication information; and
receiving, by a second network device on the first time-domain resource and the first frequency-domain resource, the first signal sent by the first terminal device, and determining, based on the first signal, signal sending or receiving between the second network device and a second terminal device on the second time-domain resource and the second frequency-domain resource.

19. The method according to claim 18, wherein the sending, by the first network device, the third indication information to the first terminal device comprises:
sending, by the first network device, the third indication information to the first terminal device on a third time-domain resource, wherein the third time-domain resource is located before the first time-domain resource.

20. The method according to claim 18 or 19, wherein the third indication information is carried in first information, and the first information is for scheduling the second signal; or the third indication information is further for scheduling the second signal.

21. The method according to any one of claims 18 to 20, wherein in the second time-domain resource, the second frequency-domain resource is a frequency-domain resource on which the first terminal device does not expect to receive a signal from a network device other than the first network device; or in the second time-domain resource, the first terminal device does not expect to receive a signal from a network device other than the first network device on the second frequency-domain resource.

22. The method according to any one of claims 18 to 21, wherein the determining, by the second network device, signal sending or receiving between the second network device and the second terminal device on the second time-domain resource and the second frequency-domain resource is specifically:
sending, by the second network device, first indication information, wherein the first indication information indicates to stop or cancel sending or receiving a third signal between the second network device and the second terminal device on the second time-domain resource and the second frequency-domain resource.

23. The method according to any one of claims 18 to 21, wherein the determining, by the second network device, signal sending or receiving between the second network device and the second terminal device on the second time-domain resource and the second frequency-domain resource is specifically:
sending, by the second network device, second indication information, wherein the second indication information indicates to adjust a space domain transmission configuration of a third signal between the second network device and the second terminal device on the second frequency-domain resource, and the space domain transmission configuration comprises at least one of a precoding matrix, a space domain filter, or a beam of the third signal.

24. The method according to any one of claims 18 to 21, wherein the determining, by the second network device, signal sending or receiving between the second network device and the second terminal device on the second time-domain resource and the second frequency-domain resource is specifically:
determining, by the second network device, to skip signal sending or receiving between the second network device and the second terminal device on the second time-domain resource and the second frequency-domain resource.

25. A communication apparatus, comprising a processor, wherein the processor is configured to execute a program or instructions, to cause the apparatus to perform the method according to any one of claims 1 to 13.

26. A communication apparatus, comprising a processor, wherein the processor is configured to execute a program or instructions, to cause the apparatus to perform the method according to any one of claims 14 to 17.

27. A communication system, comprising the communication apparatus according to claim 25 and the communication apparatus according to claim 26.

28. A computer-readable storage medium, wherein the computer-readable storage medium stores a computer program, and when the computer program is run on a computer, the computer is caused to perform the method according to any one of claims 1 to 13 or the method according to any one of claims 14 to 17.

29. A computer program product, comprising computer program code, wherein when the computer program code is run, the method according to any one of claims 1 to 13 or the method according to any one of claims 14 to 17 is implemented.
